# EUROPEAN PATENT APPLICATION

(11) **EP 4 757 410 A1**
(43) Date of publication of application: **10.06.2026**
(21) Application number: 24848254.9
(22) Date of filing: 30.07.2024
(51) Int. Cl.: H04W 28/24

(54) **AI SERVICE ESTABLISHMENT METHOD AND APPARATUS, AND NETWORK SIDE DEVICE**

(30) Priority: 02.08.2023 CN 202310966381
(71) Applicant: Vivo Mobile Communication Co., Ltd., Dongguan, Guangdong 523863 (CN)
(72) Inventor: ZHOU, Tong, Dongguan, Guangdong 523863 (CN); KANG, Yanchao, Dongguan, Guangdong 523863 (CN)
(74) Representative: Lavoix
(86) International application number: PCT/CN2024/108366
(87) International publication number: WO 2025/026299

(57) **Abstract**

The present application discloses a method and an apparatus for establishing an AI service, and a network-side device, pertaining to the field of communication technologies. The method for establishing an AI service in embodiments of the present application includes: acquiring, by a first network element, an establishment request for establishing an artificial intelligence AI service for a second network element; determining, by the first network element, an AI policy according to the establishment request; and returning, by the first network element, a response message of the establishment request to the second network element according to the AI policy.

## Description

### CROSS-REFERENCE TO RELATED APPLICATIONS

The present application claims priority to Chinese Patent Application No. 202310966381.8, filed in China on August 2, 2023, which is incorporated herein by reference in its entirety.

### TECHNICAL FIELD

The present application pertains to the field of communication technologies, and specifically relates to a method and an apparatus for establishing an AI service, and a network-side device.

### BACKGROUND

With the development of wireless mobile communication technology, artificial intelligence (Artificial Intelligence, AI) will become one of the pillar technologies of wireless mobile communication, and wireless mobile communication systems need to provide end-to-end support for AI-related services and applications. In the related art, communication systems can utilize AI to perform some operational optimizations, but AI is not provided as a general service to third-party servers (such as over the top (Over The Top, OTT) servers), nor is the AI service provided according to the requirements, purposes, or other factors of third-party servers. Third-party servers are an important supplementary part of communication systems. In this case, how to realize the AI service process according to the requirements of third-party servers is an urgent issue to be addressed currently.

### SUMMARY

Embodiments of the present application provide a method and an apparatus for establishing an AI service, and a network-side device, so as to solve the problem that wireless mobile communication systems cannot provide AI services to third-party servers.

According to a first aspect, a method for establishing an AI service is provided, where the method includes:
acquiring, by a first network element, an establishment request for establishing an artificial intelligence AI service for a second network element;
determining, by the first network element, an AI policy according to the establishment request; and
returning, by the first network element, a response message of the establishment request to the second network element according to the AI policy.

According to a second aspect, a method for establishing an AI service is provided, where the method includes:
sending, by a second network element, an establishment request for establishing an artificial intelligence AI service to a first network element; and
receiving, by the second network element, a response message of the establishment request returned by the first network element.

According to a third aspect, a method for establishing an AI service is provided, where the method includes:
acquiring, by a third network element, an establishment request for establishing an artificial intelligence AI service for a second network element; and
returning, by the third network element, a response message of the establishment request to a first network element.

According to a fourth aspect, a method for establishing an AI service is provided, where the method includes:
receiving, by a fourth network element, configuration information of a fifth network element, where the configuration information is used to configure AI resources, and the configuration information includes at least one of the following:
a third indication, where the third indication is used to indicate an AI framework;
a fourth indication, where the fourth indication is used to indicate an AI library version;
a fifth indication, where the fifth indication is used to indicate the number of single-sample inferences;
data source information;
AI service detection information; and
AI service processing rule;
receiving, by the fourth network element, first data of the second network element; and
returning, by the fourth network element, second data to the second network element.

According to a fifth aspect, a method for establishing an AI service is provided, where the method includes:
receiving, by a fifth network element, a fifth message sent by a third network element, where the fifth message includes at least one of the following: AI unit information, data source information, AI service computation amount, storage requirement, processing latency requirement, input data format, and number of single-sample inferences; and
selecting, by the fifth network element, a fourth network element according to the fifth message and an AI policy, and returning a sixth message to the third network element, where the sixth message includes information of the fourth network element, and the information of the fourth network element includes at least one of the following:
   Internet protocol IP address;
   identification information; and
   fully qualified domain name FQDN.

According to a sixth aspect, an apparatus for establishing an AI service is provided, applied to a first network element, and includes:
a first receiving module, configured to acquire an establishment request for establishing an artificial intelligence AI service for a second network element;
a first processing module, configured to determine an AI policy according to the establishment request; and
a first sending module, configured to return a response message of the establishment request to the second network element according to the AI policy.

According to a seventh aspect, an apparatus for establishing an AI service is provided, applied to a second network element, and includes:
a second sending module, configured to send an establishment request for establishing an artificial intelligence AI service to a first network element; and
a second receiving module, configured to receive a response message of the establishment request returned by the first network element.

According to an eighth aspect, an apparatus for establishing an AI service is provided, applied to a third network element, and includes:
a third receiving module, configured to acquire an establishment request for establishing an artificial intelligence AI service for a second network element; and
a third sending module, configured to return a response message of the establishment request to a first network element.

According to a ninth aspect, an apparatus for establishing an AI service is provided, applied to a fourth network element, and includes:
a fourth receiving module, configured to receive configuration information of a fifth network element, where the configuration information is used to configure AI resources, and the configuration information includes at least one of the following:
a third indication, where the third indication is used to indicate an AI framework;
a fourth indication, where the fourth indication is used to indicate an AI library version;
a fifth indication, where the fifth indication is used to indicate the number of single-sample inferences;
data source information;
AI service detection information; and
AI service processing rule; where
the fourth receiving module is further configured to receive first data of the second network element; and
a fourth sending module, configured to return second data to the second network element.

According to a tenth aspect, an apparatus for establishing an AI service is provided, applied to a fifth network element, and includes:
a fifth receiving module, configured to receive a fifth message sent by a third network element, where the fifth message includes at least one of the following: AI unit information, data source information, AI service computation amount, storage requirement, processing latency requirement, input data format, and number of single-sample inferences;
a fifth processing module, configured to select a fourth network element according to the fifth message and an AI policy; and
a fifth sending module, configured to return a sixth message to the third network element, where the sixth message includes information of the fourth network element, and the information of the fourth network element includes at least one of the following:
   Internet protocol IP address;
   identification information; and
   fully qualified domain name FQDN.

According to an eleventh aspect, a network-side device is provided, where the network-side device includes a processor and a memory, the memory stores a program or instructions executable on the processor, the program or instructions, when executed by the processor, implement the steps of the method according to the first aspect, the second aspect, the third aspect, the fourth aspect, or the fifth aspect.

According to a twelfth aspect, a first network element is provided and includes a processor and a communication interface, where the communication interface is configured to acquire an establishment request for establishing an artificial intelligence AI service for a second network element; the processor is configured to determine an AI policy according to the establishment request; and the communication interface is further configured to return a response message of the establishment request to the second network element according to the AI policy.

According to a thirteenth aspect, a second network element is provided and includes a processor and a communication interface, where the communication interface is configured to send an establishment request for establishing an artificial intelligence AI service to a first network element; and receive a response message of the establishment request returned by the first network element.

According to a fourteenth aspect, a third network element is provided and includes a processor and a communication interface, where the communication interface is configured to acquire an establishment request for establishing an artificial intelligence AI service for a second network element; and return a response message of the establishment request to a first network element.

According to a fifteenth aspect, a fourth network element is provided and includes a processor and a communication interface, where the communication interface is configured to receive configuration information of a fifth network element, where the configuration information is used to configure AI resources, and the configuration information includes at least one of the following: third indication, where the third indication is used to indicate an AI framework; fourth indication, where the fourth indication is used to indicate an AI library version; fifth indication, where the fifth indication is used to indicate the number of single-sample inferences; data source information; AI service detection information; and AI service processing rule; receive first data of the second network element; and return second data to the second network element.

According to a sixteenth aspect, a fifth network element is provided and includes a processor and a communication interface, where the communication interface is configured to receive a fifth message sent by a third network element, where the fifth message includes at least one of the following: AI unit information, data source information, AI service computation amount, storage requirement, processing latency requirement, input data format, and number of single-sample inferences; the processor is configured to select a fourth network element according to the fifth message and an AI policy; and the communication interface is further configured to return a sixth message to the third network element, where the sixth message includes information of the fourth network element, and the information of the fourth network element includes at least one of the following:
Internet protocol IP address;
identification information; and
fully qualified domain name FQDN.

According to a seventeenth aspect, a readable storage medium is provided, where the readable storage medium stores a program or instructions, and the program or instructions, when executed by a processor, implement the steps of the method according to the first aspect, or implement the steps of the method according to the second aspect, or implement the steps of the method according to the third aspect, or implement the steps of the method according to the fourth aspect, or implement the steps of the method according to the fifth aspect.

According to an eighteenth aspect, a wireless communication system is provided and includes: a first network element, a second network element, and a third network element, where
the first network element is configured to acquire an establishment request for establishing an artificial intelligence AI service for the second network element, determine an AI policy according to the establishment request, and return a response message of the establishment request to the second network element according to the AI policy;
the second network element is configured to send an establishment request for establishing an artificial intelligence AI service to the first network element, and receive the response message of the establishment request returned by the first network element; and
the third network element is configured to acquire an establishment request for establishing an artificial intelligence AI service for the second network element, and return a response message of the establishment request to the first network element; where
the first network element and the third network element are core network elements, and the second network element is a third-party service network element.

According to a nineteenth aspect, a chip is provided, where the chip includes a processor and a communication interface, the communication interface being coupled to the processor, and the processor being configured to run a program or instructions to implement the steps of the method according to the first aspect, or implement the steps of the method according to the second aspect, or implement the steps of the method according to the third aspect, or implement the steps of the method according to the fourth aspect, or implement the steps of the method according to the fifth aspect.

According to a twentieth aspect, a computer program/program product is provided, where the computer program/program product is stored in a storage medium, the computer program/program product is executed by at least one processor to implement the steps of the method according to the first aspect, or implement the steps of the method according to the second aspect, or implement the steps of the method according to the third aspect, or implement the steps of the method according to the fourth aspect, or implement the steps of the method according to the fifth aspect.

In the embodiments of the present application, a network-side device (such as a first network element) can convert a request of a second network element (such as an OTT server) into a network-understandable AI policy. Internal nodes of the network allocate corresponding AI resources (computing resources), and/or AI units, and/or data sources for the AI service according to the AI policy, thereby addressing the problem that wireless mobile communication systems cannot provide AI services to third-party servers. Thus, operator networks can provide AI service processing for OTT servers, expanding service scenarios of the operators.

### BRIEF DESCRIPTION OF THE DRAWINGS

FIG. 1 is a block diagram of a wireless communication system to which embodiments of the present application are applicable;
FIG. 2 to FIG. 6 are flowcharts of a method for establishing an AI service according to an embodiment of the present application;
FIG. 7 is a flowchart of a method for establishing an AI service according to Embodiment I of the present application;
FIG. 8 is a flowchart of a method for establishing an AI service according to Embodiment II of the present application;
FIG. 9 to FIG. 13 are schematic structural diagrams of an apparatus for establishing an AI service according to an embodiment of the present application;
FIG. 14 is a schematic structural diagram of a communication device according to an embodiment of the present application;
FIG. 15 is a schematic structural diagram of a network-side device according to an embodiment of the present application; and
FIG. 16 is a schematic structural diagram of another network-side device according to an embodiment of the present application.

### DETAILED DESCRIPTION OF EMBODIMENTS

The following clearly describes the technical solutions in the embodiments of the present application with reference to the accompanying drawings in the embodiments of the present application. Apparently, the described embodiments are only some rather than all of the embodiments of the present application. All other embodiments obtained by persons of ordinary skill in the art based on the embodiments of the present application shall fall within the protection scope of the present application.

The terms "first", "second", and the like in the present application are used to distinguish between similar objects instead of describing a specific order or sequence. It should be understood that terms used in this way are interchangeable in appropriate circumstances so that the embodiments of the present application can be implemented in other orders than the order illustrated or described herein. In addition, "first" and "second" are usually used to distinguish objects of a same type, and do not restrict a quantity of objects. For example, there may be one or a plurality of first objects. In addition, the term "or" in the present application indicates at least one of the connected objects, for example, "A or B" encompasses three scenarios: scenario one, including A but not B; scenario two, including B but not A; and scenario three, including both A and B. The character "/" generally indicates an "or" relationship between the associated objects before and after the character.

The term "indication" in the present application may be either a direct indication (or explicit indication) or an indirect indication (or implicit indication). The direct indication can be understood as the sender explicitly informing the receiver of specific information, operations to be performed, or request results in the sent indication; and the indirect indication can be understood as the receiver determining the corresponding information according to the indication sent by the sender, or making a judgment and determining the operations to be performed or request results according to the judgment result.

It should be noted that technologies described in the embodiments of the present application are not limited to a long term evolution (Long Term Evolution, LTE)/LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), or other systems. The terms "system" and "network" in the embodiments of the present application are often used interchangeably, and the technology described herein may be used in the above-mentioned systems and radio technologies, and may also be used in other systems and radio technologies. In the following descriptions, a new radio (New Radio, NR) system is described for an illustration purpose, and NR terms are used in most of the following descriptions, although these technologies may also be applied to other systems than an NR system, for example, the 6th generation (6th Generation, 6G) communication system.

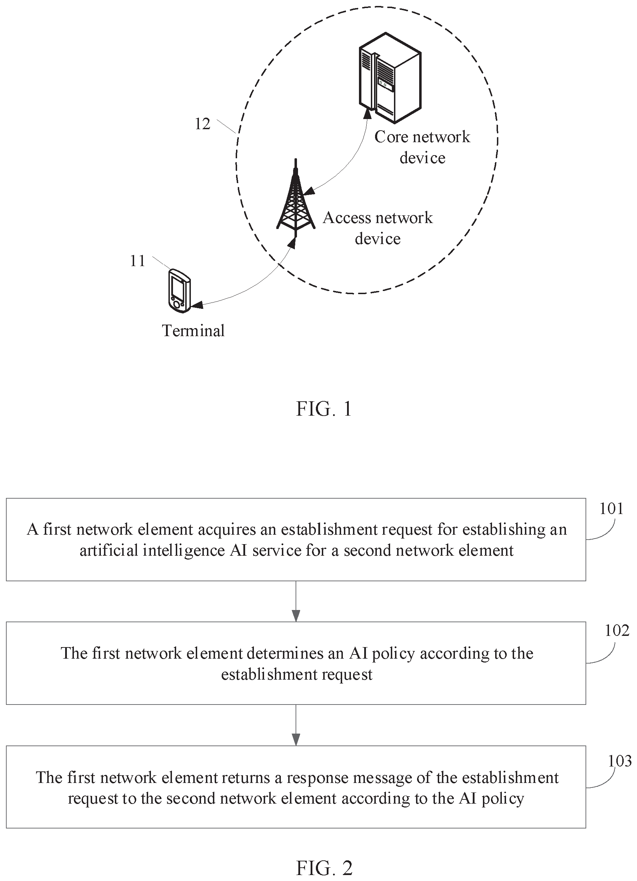

FIG. 1 is a block diagram of a wireless communication system to which the embodiments of the present application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a handheld computer, a netbook, an ultra-mobile personal computer (Ultra-mobile Personal Computer, UMPC), a mobile Internet device (Mobile Internet Device, MID), an augmented reality (Augmented Reality, AR) device, a virtual reality (Virtual Reality, VR) device, a robot, a wearable device (Wearable Device), a flight vehicle (flight vehicle), a vehicle user equipment (Vehicle User Equipment, VUE), a ship-borne equipment, a pedestrian user equipment (Pedestrian User Equipment, PUE), a smart home (home devices with a wireless communication function, for example, a refrigerator, a television, a washing machine, or a furniture), a game console, a personal computer (Personal Computer, PC), a teller machine, or self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. The vehicle user equipment may also be referred to as a vehicle terminal, a vehicle controller, a vehicle module, a vehicle component, a vehicle chip, or a vehicle unit. It should be noted that the embodiments of the present application do not impose any limitation on a specific type of the terminal 11. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be called a node B (Node B, NB), an evolved node B (Evolved Node B, eNB), the next generation node B (the next generation Node B, gNB), a new radio node B (New Radio Node B, NR Node B), an access point, a relay station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home B node (home Node B, HNB), a home evolved B node (home evolved Node B), a transmission reception point (Transmission Reception Point, TRP), or some other suitable terms in the field, as long as the same technical effects are achieved. The base station is not limited to specific technical vocabulary. It should be noted that in the embodiments of the present application, only the base station in the NR system is taken as an example for introduction, and the specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, first network element), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF).

Artificial intelligence (AI) has been widely applied in various fields currently. Integrating AI into communication networks to significantly improve technical indicators such as throughput, latency, and user capacity is an important optimization direction for future communication networks. Currently, a network data analytics function (Network Data Analytics Function, NWDAF) network element is introduced to perform some intelligent analysis. NWDAF possesses certain AI-analytical capabilities. NWDAF collects relevant data, utilizes built-in algorithms and analytical capabilities to generate some results, and provides the results to core network elements for operational optimization or statistical analysis.

The protocol data unit (Protocol Data Unit, PDU) session (session) establishment procedure includes the following steps: When UE intends to perform data transmission, it initiates a PDU session establishment request to the network (sent to SMF via AMF), where the UE allocates a PDU session identification (Identification, ID) and reports it to the network; the SMF allocates corresponding transmission resources for the PDU session of the UE, including selecting a user plane node UPF and triggering the establishment of the user plane. After the user plane is established, the UE can use the user plane corresponding to the established PDU session for data transmission.

The method and apparatus for establishing an AI service, and the network-side device provided in the embodiments of the present application will be described in detail below through some embodiments and their application scenarios in conjunction with the accompanying drawings.

It is worth noting that in the embodiments, an AI session refers to the process of communication between an OTT server and an AI resource node. After the AI session is established, a data transmission channel between the OTT server and the AI resource node is set up. Therefore, in the related art, if an OTT server intends to use an AI service (for example, AI data transmission), an AI session shall first be established. In other words, an AI session is an AI resource established between an OTT server and an AI resource node in a wireless mobile communication network. An AI session may also be referred to as an AI service connection or AI connection.

In the embodiments of the present application, an AI unit/AI model may also be called an AI unit, AI model, machine learning (machine learning, ML) model, ML unit, AI structure, AI function, AI feature, machine learning model, neural network, neural network function, neural network function or the like; or the AI unit/AI model may refer to a processing unit capable of implementing AI-related specific algorithms, formulas, processing flows, capabilities and the like; or the AI unit/AI model may be a processing method, algorithm, function, module, or unit for a specific data set; or the AI unit/AI model may be a processing method, algorithm, function, module, or unit running on AI/ML-related hardware such as a graphics processing unit (Graphics Processing Unit, GPU), a neural processing unit (Neural Processing Unit, NPU), a tensor processing unit (Tensor Processing Unit, TPU), or an application specific integrated circuit (Application Specific Integrated Circuit, ASIC), which is not specifically limited in the present application. Optionally, the specific data set includes input and/or output of the AI unit/AI model.

Optionally, the identification of the AI unit/AI model may be an AI model identification, AI structure identification, AI algorithm identification, or an identification of a specific data set associated with the AI unit/AI model, or an identification of an AI/ML-related specific scenario, environment, channel feature, or device, or an identification of an AI/ML-related function, feature, capability, or module, which is not specifically limited in the present application.

The network elements involved in the embodiments of the present application are introduced below:

| Network element name | Definition | Example |
|---|---|---|
| First network element | A central control node that converts external requirements into internal requirements | Policy and charging function, AI service management function, collaborative control function, service analysis function |
| Second network element | A third-party server where content or services are built on basic telecommunication services | OTT server |
| Third network element | A node that determines required AI resource, AI unit, and data source according to AI service category and internal requirements of the AI service | AI service management function, service management function, collaborative control function |
| Fourth network element | A node for service processing and implementation of service policy rules, specifically, it performs AI service computation processing (user plane execution process) according to commands from a seventh network element; updates AI resource status to the seventh network element | AI resource node, computing execution node, computing execution function, computing execution plane |
| Fifth network element | A node for service resource management, specifically, it allocates, updates, and releases AI/computing resources on demand and maintains status updates of Al/computing resource nodes | AI resource management function, computing control function, computing control plane |
| Sixth network element | A node for AI model management, model ID allocation, model classification, model acquisition (determining suitable models according to internal requirements), model storage, model version management, and the like | AI model management function, AI model control function, AI algorithm control function, algorithm control function, algorithm control plane |
| Seventh network element | A node that sends commands to the fourth network element, instructs the fourth network element to perform AI service computation processing, and receives AI resource status updates from the fourth network element | |
| Eighth network element | A node located between the 6G core network and external third-party application function entities (may also include some internal AFs), it is responsible for opening network capabilities and internal network information; all external applications must pass through the eighth network element to access internal data of the 6G core network. The eighth network element provides corresponding security guarantees to ensure the security of external applications accessing the 3rd generation partnership project (3rd Generation Partnership Project, 3gpp) network, and provides capabilities such as quality of service (Quality of Service, QoS)/requirement/target customization for external applications, mobility status event subscription, AF request distribution | Network exposure function, such as NEF |

Each network element supports service-oriented interfaces based on service-based architecture (Service Based Architecture, SBA) or SBA-enhanced architecture, that is, messages exchanged between network elements can be implemented through service-oriented interface protocols.

In the embodiments of the present application, the first network element is a central control node that converts external requirements into internal requirements, and may be a policy and charging function, AI service management function, collaborative control function, or service analysis function; the second network element is a third-party server where content or services are built on basic telecommunication services, and specifically may be an OTT server; the third network element determines required AI resource, AI unit, and data source according to the AI service category and internal requirements of the AI service, and specifically may be an AI service management function, service management function, or collaborative control function; the fourth network element is used for service processing and implementation of service policy rules; specifically, it performs AI service computation processing according to commands of the seventh network element (user plane execution process) and updates AI resource status to the seventh network element, and specifically may be an AI resource node, computing execution node, computing execution function, or computing execution plane; the fifth network element is used for service resource management; specifically, allocates, updates, and releases AI/computing resources on demand and maintains status updates of Al/computing resource nodes (AI RF), and specifically may be an AI resource management function, computing control function, or computing control plane; the sixth network element is used for AI model management, model ID classification, model allocation, and the like, determines suitable models according to internal requirements, and specifically may be an AI model management function, AI model control function, AI algorithm control function, algorithm control function, or algorithm control plane; and the eighth network element is located between the 6G core network and external third-party application function entities (may also include some internal AFs), and is responsible for exposing network capabilities and internal network information. All external applications must pass through the eighth network element to access internal data of the 6G core network. The eighth network element provides corresponding security guarantees to ensure the security of external applications accessing the 3rd generation partnership project (3rd Generation Partnership Project, 3GPP) network, and provides capabilities such as QoS/requirement/target customization for external applications, mobility status event subscription, and AF request distribution, and the eighth network element specifically may be a network exposure function NEF.

In addition, in the embodiments of the present application, a first message is a message sent by an OTT server to an AI policy management function, and may include at least one of the following information:
AI service requirement description information;
data network name DNN;
single network slice selection assistance information (Single Network Slice Selection Assistance Information, S-NSSAI); and
policy identification, including AI service policy indication negotiated between the second network element and the first network element.

A second message is sent by a central control node to an OTT server, the second message is used to respond to the first message, and the second message includes information of a fourth network element.

A third message is sent by a central control node to an AI service management function, and may include at least one of the following information:
identification of the second network element;
AI service identification;
AI unit parameter;
AI policy; and
address of an application server AS; where
the first network element receives information of the fourth network element returned by the third network element.

A fourth message is sent by a network exposure function to an AI service management function, and may include at least one of the following information:
identification of the second network element;
AI service identification;
AI unit parameter;
address of the third network element (AI service management function); and
AI service requirement description information.

A fifth message is sent by a central control node to an AI resource management function, and may include at least one of the following information:
AI unit information, data source information, AI service computation amount, storage requirement, processing latency requirement, input data format, and number of single-sample inferences.

A sixth message is sent by an AI resource management function to an AI service management function, the sixth message is used to respond to the fifth message, and the sixth message includes information of a fourth network element, where the information of the fourth network element includes at least one of the following:
Internet protocol (Internet Protocol, IP) address;
identification information; and
fully qualified domain name (Fully Qualified Domain Name, FQDN).

A seventh message is sent by an AI service management function to an AI model management function, the seventh message is used to request AI unit information, and the seventh message includes at least one of the following: service type indication, expected accuracy rate, data storage requirement, AI unit input data format, AI unit output data format, generalization metric, and applicable scope indication.

An eighth message is sent by an AI model management function to an AI service management function, the eighth message is used to respond to the seventh message, and the eighth message is used to indicate AI unit information, where the AI unit information includes at least one of the following: structure of the AI unit, parameters of the AI unit, executable file for AI unit inference, and download address of the AI unit.

A ninth message is sent by an AI service management function to a first network element, and the ninth message includes information of a fourth network element.

Referring to FIG. 2, FIG. 2 is a flowchart of a method for establishing an AI service according to an embodiment of the present application. The method is executed by a first network element. As shown in FIG. 2, the method includes the following steps:
Step 101: The first network element acquires an establishment request for establishing an artificial intelligence AI service for a second network element.
Step 102: The first network element determines an AI policy according to the establishment request.
Step 103: The first network element returns a response message of the establishment request to the second network element according to the AI policy.

In the embodiment of the present application, a network-side device such as a first network element can convert a request of a second network element such as an OTT server into a network-understandable AI policy. Internal nodes of the network allocate corresponding AI resources (computing resources), and/or AI units, and/or data sources for the AI service according to the AI policy, thereby addressing the problem that wireless mobile communication systems cannot provide AI services to third-party servers. Thus operator networks can provide AI service processing for OTT servers, expanding service scenarios of the operators.

In some embodiments, when the first network element is a policy and charging function, the acquiring, by a first network element, an establishment request for establishing an artificial intelligence AI service for a second network element includes:
receiving, by the first network element, a first message, where the first message is used to request to establish an AI service for the second network element, and the first message includes at least one of the following:
AI service requirement description information;
data network name (Data Network Name, DNN);
single network slice selection assistance information S-NSSAI; and
policy identification, including AI service policy indication negotiated between the second network element and the first network element.

Based on the information included in the first message, a central control node of the network-side device may convert AI service requirements into internal policies executable by the network-side device, including AI policies and the like, where the AI policies include AI service processing latency, AI service processing accuracy, and the like. An AI service management function decides on demand according to the AI policy whether to interact with other AI network elements to acquire relevant configuration information (for example, if no model is provided, the AI service management function interacts with an AI model management function to acquire a model; if the service request includes an indication that a data source is a data plane, the AI service management function interacts with the data plane to acquire a data source). The configuration information includes at least one of the following: model; model download information (for example, model download address); data source information (data source address); and AI service computation amount (computing size and type).

In some embodiments, the returning a response message of the establishment request to the second network element includes:
returning a second message to the second network element, where the second message is used to respond to the first message, and the second message includes information of a fourth network element.

In some embodiments, when the first network element is a policy and charging function, the method further includes:
sending, by the first network element, a third message to a third network element, where the third message includes at least one of the following:
identification of the second network element;
AI service identification;
AI unit parameter, such as whether a network internal AI unit is required, AI unit identification, and AI unit size;
AI policy; and
address of an application server AS; and
receiving, by the first network element, information of a fourth network element returned by the third network element.

In this way, the first network element may acquire information of the fourth network element from the third network element so as to return the information of the fourth network element to the second network element.

In some embodiments, when the first network element is a third network element (such as an AI service management function), the acquiring, by a first network element, an establishment request for establishing an artificial intelligence AI service for a second network element includes:
receiving, by the first network element, a fourth message, where the fourth message includes at least one of the following:
identification of the second network element;
AI service identification;
AI unit parameter, such as whether a network internal AI unit is required, AI unit identification, and AI unit size;
address of the first network element; and
AI service requirement description information.

Based on the information included in the fourth message, a central control node of the network-side device may convert AI service requirements into internal policies executable by the network-side device, including AI policies and the like, where the AI policies include AI service processing latency, AI service processing accuracy, and the like. An AI service management function decides on demand according to the AI policy whether to interact with other AI network elements to acquire relevant configuration information (for example, if no model is provided, the AI service management function interacts with an AI model management function to acquire a model; if the service request includes an indication that a data source is a data plane, the AI service management function interacts with the data plane to acquire a data source). The configuration information includes at least one of the following: model; model download information (for example, model download address); data source information (data source address); and AI service computation amount (computing size and type).

In some embodiments, the AI service requirement description information includes at least one of the following:
AI service identification, used to indicate AI service type, such as AI unit training, AI unit inference, AI unit validation, and AI unit deployment;
service type indication, such as face recognition, environment reconstruction, and trajectory planning;
AI service quality of experience QoE requirement;
AI service requirement and/or objective information, including AI service processing latency, AI service processing accuracy, AI service computation amount, data processing scale, and the like;
description information of an AI unit, including whether a network internal model is needed, model identification, model size, and the like, where the model size may be explicitly indicated, such as 10M, 20M, or 100M, or implicitly indicated, such as small, medium, large, and extra large, and when implicitly indicating the model size, the size values need to be agreed in advance;
first indication, indicating whether a network internal AI unit is required, the network including a 3GPP network and a 6G network; and
first information, indicating whether network internal data and data source are needed.

In some embodiments, when the first network element is a third network element (for example, an AI service management function), the method further includes:
sending, by the first network element, a fifth message to a fifth network element, where the fifth message includes at least one of the following:
AI unit information, data source information, AI service computation amount, storage requirement, processing latency requirement, input data format, and number of single-sample inferences; and
receiving, by the first network element, information of a fourth network element returned by the fifth network element.

In this way, the first network element may acquire information of the fourth network element from the fifth network element so as to return the information of the fourth network element to the second network element.

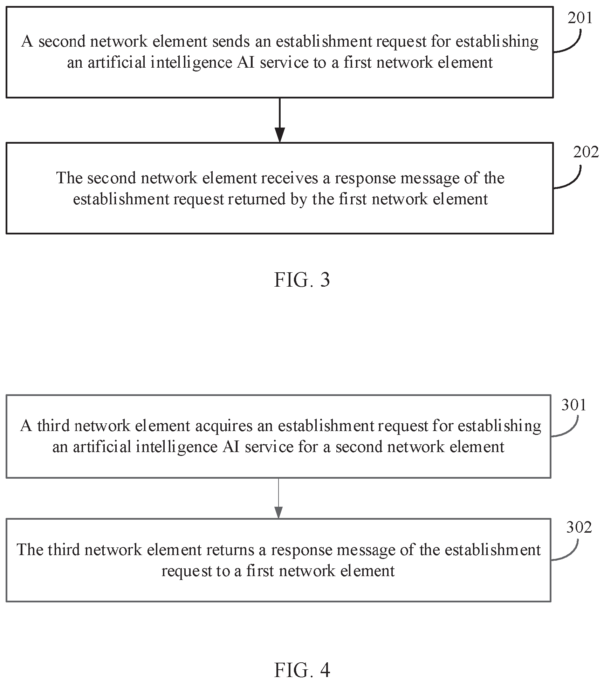

Referring to FIG. 3, FIG. 3 is a flowchart of a method for establishing an AI service according to an embodiment of the present application. The method is executed by a second network element. As shown in FIG. 3, the method includes the following steps:
Step 201: The second network element sends an establishment request for establishing an artificial intelligence AI service to a first network element.
Step 202: The second network element receives a response message of the establishment request returned by the first network element.

In the embodiment of the present application, a network-side device can convert a request of a second network element such as an OTT server into a network-understandable AI policy. Internal nodes of the network allocate corresponding AI resources (computing resources), and/or AI units, and/or data sources for the AI service according to the AI policy, thereby addressing the problem that wireless mobile communication systems cannot provide AI services to third-party servers. Thus, operator networks can provide AI service processing for OTT servers, expanding service scenarios of the operators.

In some embodiments, the sending, by a second network element, an establishment request for establishing an artificial intelligence AI service to a first network element includes:
sending, by the second network element, a first message to the first network element, where the first message is used to request to establish an AI service for the second network element, and the first message includes at least one of the following:
AI service requirement description information;
data network name DNN;
single network slice selection assistance information S-NSSAI; and
policy identification, including AI service policy indication negotiated between the second network element and the first network element.

Based on the information included in the first message, a central control node of the network-side device may convert AI service requirements into internal policies executable by the network-side device, including AI policies, and the like, where the AI policies include AI service processing latency, AI service processing accuracy, and the like. An AI service management function decides on demand according to the AI policy whether to interact with other AI network elements to acquire relevant configuration information (for example, if no model is provided, the AI service management function interacts with an AI model management function to acquire a model; if the service request includes an indication that a data source is a data plane, the AI service management function interacts with the data plane to acquire a data source); the configuration information includes at least one of the following: model; model download information (for example, model download address); data source information (data source address); and AI service computation amount (computing size and type).

In some embodiments, the AI service requirement description information includes at least one of the following:
AI service identification, used to indicate AI service type, such as AI unit training, AI unit inference, AI unit validation, and AI unit deployment;
service type indication, such as face recognition, environment reconstruction, and trajectory planning;
AI service quality of experience (Quality of Experience, QoE) requirement;
AI service requirement and/or objective information, including AI service processing latency, AI service processing accuracy, AI service computation amount, data processing scale, and the like;
description information of an AI unit, including whether a network internal model is needed, model identification, model size, and the like, where the model size may be explicitly indicated, such as 10M, 20M, or 100M, or implicitly indicated, such as small, medium, large, and extra large, and when implicitly indicating the model size, the size values need to be agreed in advance;
first indication, indicating whether a network internal AI unit is required; and
first information, indicating whether network internal data and data source are needed.

In some embodiments, the receiving, by the second network element, a response message of the establishment request returned by the first network element includes:
receiving, by the second network element, a second message returned by the first network element, where the second message is used to respond to the first message, and the second message includes information of a fourth network element.

In some embodiments, after the receiving, by the second network element, a second message returned by the first network element, the method further includes:
sending, by the second network element, first data to the fourth network element; and
receiving, by the second network element, second data returned by the fourth network element.

In this embodiment, the steps of sending, by the second network element, first data to the fourth network element and receiving second data returned by the fourth network element may be performed once or multiple times.

The second network element may first send first data to the fourth network element and then receive second data from the fourth network element; or the second network element may first receive second data from the fourth network element and then send first data to the fourth network element.

The first data may be forwarded via a network exposure function or sent directly by the second network element to the fourth network element; and
the second data may be forwarded via a network exposure function or sent directly by the fourth network element to the second network element.

In some embodiments, the first data includes at least one of the following:
AI unit input data;
AI unit label data, where the label data is used for calculating a loss function during AI unit training, or for evaluating AI unit inference performance during AI unit monitoring;
ranking of inference results of multiple AI units;
AI unit structure;
AI unit parameter;
AI unit description;
output of an AI unit split layer; and
gradient of an AI unit split layer.

In some embodiments, the second data includes at least one of the following:
network-provided AI unit input data, such as AI unit input data provided by a fourth network element (for example, AI resource node);
network-provided AI unit label data, such as AI unit label data provided by a fourth network element (for example, AI resource node);
network-provided AI unit output result, such as AI unit output result provided by a fourth network element (for example, AI resource node);
action generated based on reinforcement learning;
network-provided AI unit structure, such as AI unit structure provided by a fourth network element (for example, AI resource node);
network-provided AI unit parameter, such as AI unit parameter provided by a fourth network element (for example, AI resource node);
network-provided AI unit description, such as AI unit description provided by a fourth network element (for example, AI resource node), where the AI unit description includes AI unit size, AI unit training algorithm, AI unit precision/accuracy, AI unit vendor, AI unit ID, AI unit functionality (functionality) ID, and the like;
network-provided output of an AI unit split layer, such as output of an AI unit split layer provided by a fourth network element (for example, AI resource node), where, in split inference, the entire AI unit is divided into multiple blocks. For example, a neural network has 10 layers in total, the OTT server infers four layers, and the AI resource node infers six layers. Herein, the fourth layer is the split layer, and the OTT server sends the output of the fourth layer to the AI resource node for inference of the subsequent six layers; and
network-provided gradient of an AI unit split layer, such as gradient of an AI unit split layer provided by a fourth network element (for example, AI resource node).

Referring to FIG. 4, FIG. 4 is a flowchart of a method for establishing an AI service according to an embodiment of the present application. The method is executed by a third network element. As shown in FIG. 4, the method includes the following steps:
Step 301: The third network element acquires an establishment request for establishing an artificial intelligence AI service for a second network element.
Step 302: The third network element returns a response message of the establishment request to a first network element.

In some embodiments, when the sender of the AI service establishment request is a policy and charging function, the acquiring, by the third network element, an establishment request for establishing an artificial intelligence AI service for a second network element includes:
receiving, by the third network element, a third message, where the third message is used to request at least one of the following for the AI service of the second network element: AI resource, AI unit, and data source, and the third message includes at least one of the following:
identification of the second network element;
AI service identification;
AI unit parameter, for example, whether a network internal AI unit is required, an AI unit identification, and an AI unit size;
AI policy; and
address of an application server access stratum (Access Stratum, AS).

In some embodiments, before the acquiring, by the third network element, AI resources, and/or AI unit, and/or data source, the method further includes:
acquiring, by the third network element, an AI policy, where the acquisition manner includes at least one of the following:
acquiring according to local configuration; and
acquiring from the first network element.

An AI service management function decides on demand according to the AI policy whether to interact with other AI network elements to acquire relevant configuration information (for example, if no model is provided, the AI service management function interacts with an AI model management function to acquire a model; if the service request includes an indication that a data source is a data plane, the AI service management function interacts with the data plane to acquire a data source). The configuration information includes at least one of the following: model; model download information (for example, model download address); data source information (data source address); and AI service computation amount (computing size and type).

In some embodiments, the acquiring, by the third network element, AI resources includes:
sending, by the third network element, a fifth message to a fifth network element, so that the fifth network element selects a fourth network element according to the fifth message and the AI policy, where the fifth message includes at least one of the following: AI unit information, data source information (for example, data source address), AI service computation amount, storage requirement, processing latency requirement, AI unit input data format, and number of single-sample inferences; and
receiving, by the third network element, a sixth message returned by the fifth network element, where the sixth message is used to respond to the fifth message, the sixth message includes information of a fourth network element, the fourth network element is determined according to the fifth message and the AI policy, and the information of the fourth network element includes at least one of the following:
   Internet protocol IP address;
   identification information; and
   fully qualified domain name FQDN.

In this way, the third network element may acquire information of the fourth network element from the fifth network element and return the information of the fourth network element.

In some embodiments, before the sending, by the third network element, a fifth message to the fifth network element, the method further includes:
in a case that a first condition is satisfied, sending, by the third network element, a seventh message to a sixth network element, where the seventh message is used to request AI unit information, and the seventh message includes at least one of the following: service type indication, expected accuracy rate, data storage requirement, AI unit input data format, AI unit output data format, generalization metric, and applicable scope indication; where the service type indication, the expected accuracy rate, and the data storage requirement may be indicators of the AI unit or requirements of the AI service, and a corresponding AI unit is found according to the requirements of the AI service, so that the AI unit can match the service type, achieve the expected accuracy rate, and satisfy the data storage requirement; and
receiving, by the third network element, an eighth message sent by the sixth network element, where the eighth message is used to respond to the seventh message, the eighth message is used to indicate AI unit information, and the AI unit information includes at least one of the following: structure of the AI unit, parameters of the AI unit, executable file for AI unit inference, and download address of the AI unit; where
the first condition includes at least one of the following:
   the AI service establishment request indicates that the second network element does not include AI unit information;
   the AI service establishment request includes a first indication indicating that the third network element needs to interact with the sixth network element; and
   the third network element cannot acquire AI unit information.

The generalization metric of the AI unit includes at least one of the following:
seventh information, where the seventh information includes: identification of a first data set, identification of a second data set, and indicator difference of the AI unit under the second data set and the first data set, the first data set being a data set used for AI unit training, and the second data set being a data set used for AI unit validation;
second information, where the second information includes: sixth indication and indicator threshold of the AI unit under supported data sets, the sixth indication being used to indicate data sets that the AI unit can support;
third information, where the third information includes: identification of a first scenario, identification of a second scenario, and indicator difference of the AI unit under the second scenario and the first scenario, the first scenario being a scenario during AI unit training, and the second scenario being a scenario during AI unit validation;
fourth information, where the fourth information includes: seventh indication and indicator threshold of the AI unit under supported scenarios, the seventh indication being used to indicate scenarios that the AI unit can support;
fifth information, where the fifth information includes: identification of a first domain, identification of a second domain, and indicator difference of the AI unit under the second domain and the first domain, the first domain being a domain during AI unit training, and the second domain being a domain during AI unit validation; and
sixth information, where the sixth information includes: eighth indication and indicator threshold of the AI unit under supported domains, the eighth indication being used to indicate domains that the AI unit can support.

The applicable scope indication is a scope in which the AI unit may be applied; for example, a data set scope, or scenario scope, or domain scope that can achieve a target indicator threshold.

In this embodiment, when the first condition is satisfied, the AI service management function needs to interact with the AI model management function to acquire AI unit information.

In some embodiments, the returning, by the third network element, a response message of the establishment request to the first network element includes:
returning, by the third network element, a ninth message to the first network element, where the ninth message includes information of a fourth network element, and returning, by the first network element, a second message to the second network element, where the second message includes information of the fourth network element. Optionally, the second message is forwarded via a network exposure function.

In this embodiment, since the third network element is an internal network element, the control plane needs to interact with the second network element through the first network element. Therefore, the third network element may return the information of the fourth network element to the first network element, and the first network element returns the information of the fourth network element to the second network element.

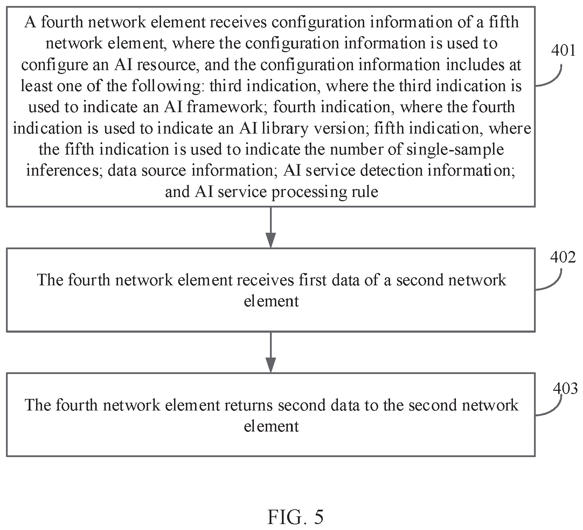

Referring to FIG. 5, FIG. 5 is a flowchart of a method for establishing an AI service according to an embodiment of the present application. The method being executed by a fourth network element. As shown in FIG. 5, the method includes the following steps:
Step 401: The fourth network element receives configuration information of a fifth network element, where the configuration information is used to configure AI resources, and the configuration information includes at least one of the following: third indication, where the third indication is used to indicate an AI framework; fourth indication, where the fourth indication is used to indicate an AI library version; fifth indication, where the fifth indication is used to indicate the number of single-sample inferences; data source information; AI service detection information, used for an AI resource node to detect and identify AI service traffic; and AI service processing rules, used for an AI resource node to process and forward AI service traffic.
Step 402: The fourth network element receives first data of the second network element.
Step 403: The fourth network element returns second data to the second network element.

In this embodiment, the fourth network element (for example, AI resource node) may configure AI resources according to the configuration information.

In some embodiments, the first data may be forwarded via a network exposure function or sent directly by the second network element to the fourth network element; and
the second data can be forwarded via a network exposure function or sent directly by the fourth network element to the second network element.

In some embodiments, the first data includes at least one of the following:
AI unit input data;
AI unit label data, where the label data is used for calculating a loss function during AI unit training, or for evaluating AI unit inference performance during AI unit monitoring;
ranking of inference results of multiple AI units;
AI unit structure;
AI unit parameter;
AI unit description;
output of an AI unit split layer; and
gradient of an AI unit split layer.

In some embodiments, the second data includes at least one of the following:
network-provided AI unit input data, such as AI unit input data provided by a fourth network element (for example, AI resource node);
network-provided AI unit label data, such as AI unit label data provided by a fourth network element (for example, AI resource node);
network-provided AI unit output result, such as AI unit output result provided by a fourth network element (for example, AI resource node);
action generated based on reinforcement learning;
network-provided AI unit structure, such as AI unit structure provided by a fourth network element (for example, AI resource node);
network-provided AI unit parameter, such as AI unit parameter provided by a fourth network element (for example, AI resource node);
network-provided AI unit description, such as AI unit description provided by a fourth network element (for example, AI resource node), where the AI unit description includes AI unit size, AI unit training algorithm, AI unit precision/accuracy, AI unit vendor, AI unit ID, AI unit functionality ID, and the like;
network-provided output of an AI unit split layer, such as output of an AI unit split layer provided by a fourth network element (for example, AI resource node), where, in split inference, the entire AI unit is divided into multiple blocks. For example, a neural network has 10 layers in total, the OTT server infers four layers, and the AI resource node infers six layers. Herein, the fourth layer is the split layer, and the OTT server sends the output of the fourth layer to the AI resource node for inference of the subsequent six layers; and
network-provided gradient of an AI unit split layer, such as gradient of an AI unit split layer provided by a fourth network element (for example, AI resource node).

In some embodiments, the method further includes:
acquiring, by the fourth network element, intra-network data from a data source.

In some embodiments, the method further includes:
performing, by the fourth network element, at least one of the following according to the configuration information:
AI unit aggregation;
single AI unit training;
multiple AI unit trainings;
single AI unit inference; and
multiple AI unit inferences.

In some embodiments, after the fourth network element completes the configured operations, the method further includes:
sending, by the fourth network element, an AI service termination notification to the fifth network element, so that a third network element, after receiving the AI service termination notification forwarded by the fifth network element, sends a confirmation message to the fifth network element; and
receiving, by the fourth network element, an AI resource release message sent by the fifth network element, where the AI resource release message is sent after the fifth network element receives the confirmation message.

In this embodiment, after the fifth network element (for example, AI resource management function) receives the AI service termination notification sent by the fourth network element, it sends an AI service termination notification to the third network element (for example, AI service management function), and the third network element (for example, AI service management function) feeds back an ACK confirmation to the fifth network element (for example, AI resource management function). Since the fourth network element cannot directly send the AI service termination notification to the third network element, the AI service termination notification needs to be forwarded via the fifth network element.

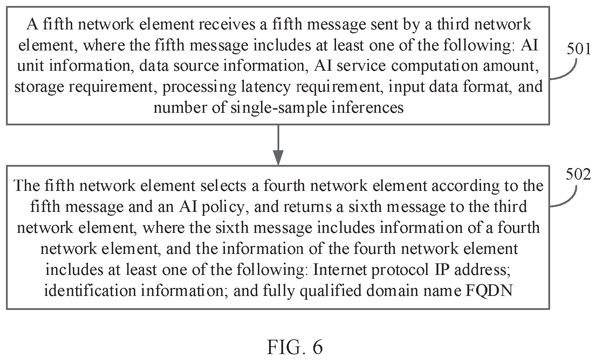

Referring to FIG. 6, FIG. 6 is a flowchart of a method for establishing an AI service according to an embodiment of the present application. The method being executed by a fifth network element. As shown in FIG. 6, the method includes the following steps:
Step 501: The fifth network element receives a fifth message sent by a third network element, where the fifth message includes at least one of the following: AI unit information, data source information, AI service computation amount, storage requirement, processing latency requirement, input data format, and number of single-sample inferences.
Step 502: The fifth network element selects a fourth network element according to the fifth message and an AI policy, and returns a sixth message to the third network element, where the sixth message includes information of the fourth network element, and the information of the fourth network element includes at least one of the following:
   Internet protocol IP address;
   identification information; and
   fully qualified domain name FQDN.

In this embodiment, the fifth network element (for example, AI resource management function) selects a fourth network element according to the fifth message and the AI policy, and returns information of the fourth network element to the third network element (for example, AI service management function), so that the third network element (for example, AI service management function) returns the information of the fourth network element to the first network element or a second network element. The information of the fourth network element is forwarded via a network exposure function.

The AI unit information includes at least one of the following: AI unit, network structure of the AI unit, parameters corresponding to the AI unit network, AI unit download address, and executable file. The data source is a data source required by the AI resource node for AI processing, provided by a 6G network. The storage requirement is a storage requirement required by the AI service, the processing latency requirement is a processing latency requirement of the AI unit, the input data format is an input data format of the AI unit, and the number of single-sample inferences is the number of single-sample inferences for the AI service.

In some embodiments, the method further includes:
sending, by the fifth network element, configuration information to the fourth network element, where the configuration information is used to configure AI resources, and the configuration information includes at least one of the following:
third indication, where the third indication is used to indicate an AI framework;
fourth indication, where the fourth indication is used to indicate an AI library version;
fifth indication, where the fifth indication is used to indicate the number of single-sample inferences;
data source information;
AI service detection information; and
AI service processing rules.

In this embodiment, the fifth network element may send configuration information to the fourth network element so as to configure AI resources.

In some embodiments, the method further includes:
receiving, by the fifth network element, a confirmation message sent by the third network element; and
sending, by the fifth network element, an AI resource release message to the fourth network element.

In this embodiment, after the fifth network element (for example, AI resource management function) receives the confirmation message sent by the third network element, it may notify the fourth network element to release AI resources, avoiding waste of AI resources.

In this embodiment, a sixth network element (for example, AI model management function) is configured to receive a seventh message of a third network element (for example, AI service management function), where the seventh message is used to request AI unit information, and the seventh message includes at least one of the following: service type indication, expected accuracy rate, data storage requirement, AI unit input data format, AI unit output data format, generalization metric, and applicable scope indication; and return an eighth message to the third network element, where the eighth message is used to respond to the seventh message, the eighth message is used to indicate AI unit information, and the AI unit information includes at least one of the following: structure of the AI unit, parameters of the AI unit, executable file for AI unit inference, and download address of the AI unit; the sixth network element may also receive an updated AI unit parameter from a fourth network element (for example, an AI resource node), and the sixth network element performs AI unit parameter update or AI unit update according to the updated AI unit parameter, which may also include AI unit version update.

The technical solutions of the present application are further introduced below in conjunction with the accompanying drawings and specific embodiments.

### Embodiment I

In this embodiment, a policy and charging function is used as a central control node. An OTT server, due to an AI service establishment requirement, requests allocation of AI service resources from the policy and charging function. The policy and charging function allocates a corresponding AI policy according to the AI service establishment request, for corresponding network elements to allocate corresponding resources. When allocating a policy, the policy and charging function comprehensively considers end-to-end service requirements. Thereafter, the policy and charging function initiates an AI service establishment request procedure to an AI service management function.

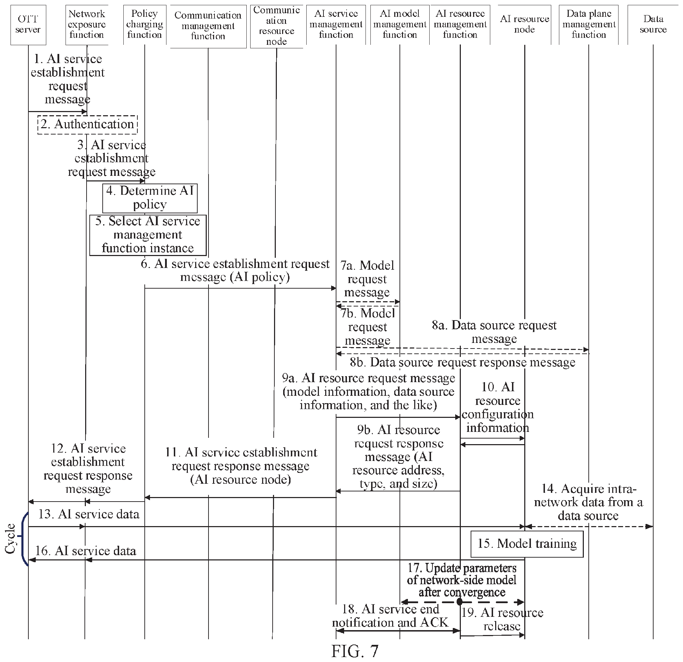

As shown in FIG. 7, this embodiment includes the following steps:
Step 1: A second network element (for example, OTT server) sends an AI service establishment request message (that is, the first message) to a network exposure function, where the AI service establishment request message is used to request the network-side device to establish a corresponding AI service therefor.

The AI service establishment request message includes at least one of the following information:
AI service requirement description information;
data network name DNN;
single network slice selection assistance information S-NSSAI; and
policy identification, including AI service policy indication negotiated between the second network element and the first network element.

The AI service requirement description information includes at least one of the following:
AI service identification, used to indicate AI service type, such as AI unit training, AI unit inference, AI unit validation, and AI unit deployment;
service type indication, such as face recognition, environment reconstruction, and trajectory planning;
AI service quality of experience QoE requirement;
AI service requirement and/or objective information, including AI service processing latency, AI service processing accuracy, AI service computation amount, data processing scale, and the like;
description information of an AI unit, including whether a network internal model is needed, model identification, model size, and the like, where the model size may be explicitly indicated, such as 10M, 20M, or 100M, or implicitly indicated, such as small, medium, large, and extra large, and when implicitly indicating the model size, the size values need to be agreed in advance;
first indication, indicating whether a network internal AI unit is required; and
first information, indicating whether network internal data and data source are needed.

Step 2: Optionally, the network exposure function authenticates the AI service establishment request message to determine whether the second network element (for example, OTT server) can request this type of service.

The network exposure function needs to request OTT-related data of the OTT server from a unified data management (Unified Data Management, UDM) and/or user datagram protocol (User Datagram Protocol, UDR), including but not limited to subscription data and policy data, for verifying whether AI service-related subscription information exists. If the information exists, subsequent procedures are performed; if the information does not exist, the network exposure function rejects the AI service establishment request of the OTT server.

Step 3: The network exposure function forwards the AI service establishment request message (that is, the first message) to the first network element (for example, policy and charging function).

Step 4: The first network element (for example, policy and charging function) generates a corresponding AI policy according to the AI service establishment request message. When allocating an AI policy, the policy and charging function comprehensively considers end-to-end service requirements of the AI service.

Step 5: The first network element (for example, policy and charging function) selects a third network element (for example, AI service management function) according to the AI service establishment request message.

The first network element (for example, policy and charging function) discovers a matching third network element (for example, AI service management function) instance using NRF or according to local configuration information based on at least one of the following factors:
area of interest (Area of Interest, AOI);
UE AI task-related subscription information;
DNN;
S-NSSAI;
AI service identification;
supported AI services; and
third network element (for example, AI service management function) instance capabilities, including determined capabilities such as AI service processing latency, AI service processing accuracy, and AI service computation amount.

Step 6: The first network element (for example, policy and charging function) sends an AI service establishment request message (that is, the third message) to the third network element (for example, AI service management function), for requesting allocation of a corresponding model and AI resources for the AI service.

The AI service establishment request message includes at least one of the following: OTT server identification, AI service identification, model-related parameters, AI policy, AS address, and the like.

In this embodiment, the first network element (for example, policy and charging function) and the third network element (for example, AI service management function) may be co-located; and if the policy and charging function and the AI service management function are co-located, step 6 is implemented internally in the network element.

Step 7a: The third network element (for example, AI service management function) sends a model request message (that is, the seventh message) to the sixth network element (for example, AI model management function), for determining AI unit information.

Step 7a is an optional step and needs to be performed under at least one of the following conditions:
the AI service establishment request message indicates that the OTT server does not include AI unit information;
the AI service establishment request message includes an indication that interaction with the AI model management function is needed; and
the AI service management function cannot acquire AI unit information.

The AI service management function selects the AI model management function instance according to at least one of the following factors:
DNN;
S-NSSAI;
AI service identification;
supported AI services;
service area information; and
supported AI unit information.

Step 7b: The sixth network element (for example, AI model management function) sends a model request response message (that is, the eighth message) to the third network element (for example, AI service management function), for indicating AI unit information.

The third network element (for example, AI service management function) may determine the data source information according to the AI unit information; and if the data source information is already determined, step 8 is not performed.

Step 8a: The third network element (for example, AI service management function) sends a data source request message to a data plane management function, for determining data source information.

Step 8a is an optional step and needs to be performed under at least one of the following conditions:
the AI service establishment request message indicates that the OTT server does not include data source information;
the AI service establishment request message includes an indication that interaction with the data plane management function is needed;
the AI service management function cannot acquire data source information; and
the AI service management function selects the data plane management function instance according to at least one of the following factors:
   DNN;
   S-NSSAI;
   AI service identification;
   supported AI services;
   service area information; and
   data source information.

Step 8b: The data plane management function sends a model request response message to the third network element (for example, AI service management function), for indicating data source information.

Step 9a: The third network element (for example, AI service management function) sends an AI resource request message (that is, the fifth message) to a fifth network element (for example, AI resource management function), and the fifth network element (for example, AI resource management function) determines a suitable AI resource node according to the AI resource request message and the AI policy.

The AI resource request message includes at least one of the following:
AI unit information (AI unit or AI unit download address);
data source information (data source address);
AI service computation amount (computing size and type);
storage requirement;
processing latency requirement;
input data format; and
number of single-sample inferences.

Step 10: The fifth network element (for example, AI resource management function) provides AI resource configuration information to a fourth network element (for example, AI resource node).

The AI resource configuration information includes at least one of the following:
data source information (data source address);
AI service detection information; and
AI service processing rules.

Step 9b: The fifth network element (for example, AI resource management function) sends an AI resource request response message (that is, the sixth message) to the third network element (for example, AI service management function), where the message includes AI resource node information, and the AI resource node information includes at least one of the following:
IP address;
ID information; and
FQDN.

The third network element (for example, AI service management function), the sixth network element (for example, AI model management function), and the AI resource management function may be co-located; and if the AI service management function, AI model management function, and AI resource management function are co-located, steps 7 and 9 are implemented internally in the network element.

Step 11: The third network element (for example, AI service management function) sends an AI service establishment request message to the first network element (for example, policy and charging function), for including information of the fourth network element (for example, AI resource node).

Step 12: The first network element (for example, policy and charging function) sends a response message corresponding to the request message of step 1 (that is, the second message) to the OTT server, for notifying the result of the AI service request, including AI resource node information. The response message may also be forwarded via a network exposure function.

Step 13: The OTT server sends first data to the fourth network element (for example, AI resource node), where the first data may also be forwarded via a network exposure function.

The first data includes but is not limited to at least one of the following:
AI unit input data provided by the OTT server;
AI unit label data provided by the OTT server;
ranking of inference results of multiple AI units provided by the OTT server;
AI unit structure provided by the OTT server;
AI unit parameter provided by the OTT server; and
AI unit description provided by the OTT server.

The first data may be interpretable data or may be privately processed data, such as encrypted data.

Step 14: Optionally, the fourth network element (for example, AI resource node) acquires intra-network data from a data source.

Step 15: Perform at least one of the following operations according to the AI resource configuration:
AI unit aggregation;
single AI unit training;
multiple AI unit trainings;
single AI unit inference; and
multiple AI unit inferences.

Step 16: The fourth network element (for example, AI resource node) sends second data to the OTT server, where the second data may also be forwarded via a network exposure function.

The second data includes but is not limited to at least one of the following:
network-provided AI unit input data;
network-provided AI unit label data;
network-provided AI unit output result;
action generated based on reinforcement learning;
network-provided AI unit structure;
network-provided AI unit parameter (for example, aggregated AI unit parameter in horizontal federation);
network-provided AI unit description (for example, initial AI unit structure in horizontal federation);
network-provided output of an AI unit split layer; and
network-provided gradient of an AI unit split layer; and
the second data may be interpretable data or may be privately processed data, such as encrypted data.

In the embodiments of the present application, the execution order of step 13 and step 16 may be exchanged.

Step 17: Optionally, if the AI service is AI unit training, after training convergence or the number of iterations reaches the maximum number, the fourth network element updates an AI unit parameter. Specifically, the fourth network element (for example, AI resource node) sends the updated AI unit parameter to the sixth network element (for example, AI model management function), one such method involves forwarding via the fifth network element (for example, AI resource management function). The sixth network element performs AI unit parameter update or AI unit update according to the updated AI unit parameter, which may also include AI unit version update.

Step 18: The fourth network element (for example, AI resource node) sends an AI service termination notification to the third network element (for example, AI service management function). The third network element (for example, AI service management function) sends an ACK to the fifth network element (for example, AI resource management function).

Step 19: The fifth network element (for example, AI resource management function) sends an AI resource release message to the fourth network element (for example, AI resource node).

### Embodiment II

In this embodiment, a third network element (for example, AI service management function) is used as a central control node. An OTT server, due to an AI service establishment requirement, requests allocation of AI service resources from the third network element (for example, AI service management function). The third network element (for example, AI service management function) receives a request message and negotiates with a policy and charging function to obtain an AI policy.

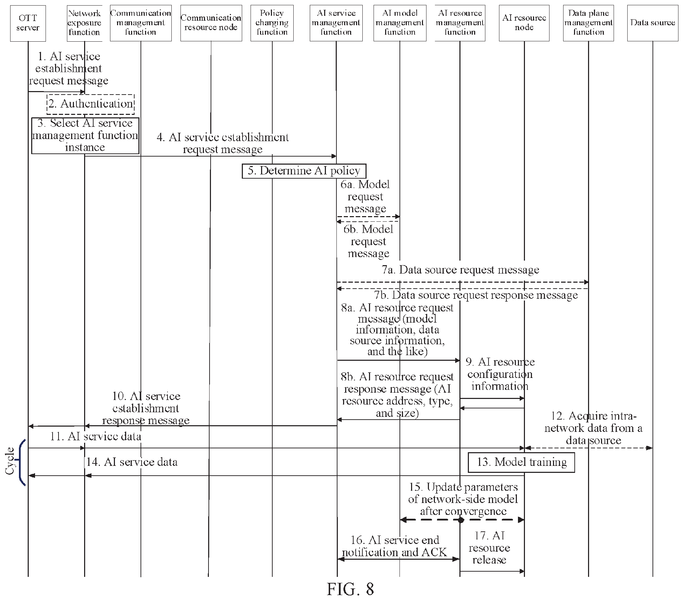

As shown in FIG. 8, this embodiment includes the following steps:
Step 1: The OTT server initiates an AI service establishment request message (that is, the first message) to a network exposure function, where the message is used to request the network to establish a corresponding AI service therefor.

The AI service establishment request message includes at least one of the following information:
AI service requirement description information;
data network name DNN;
single network slice selection assistance information S-NSSAI; and
policy identification, including AI service policy indication negotiated between the second network element and the first network element.

The AI service requirement description information includes at least one of the following:
AI service identification, used to indicate AI service type, such as AI unit training, AI unit inference, AI unit validation, and AI unit deployment;
service type indication, such as face recognition, environment reconstruction, and trajectory planning;
AI service quality of experience QoE requirement;
AI service requirement and/or objective information, including AI service processing latency, AI service processing accuracy, AI service computation amount, data processing scale, and the like;
description information of an AI unit, including whether a network internal model is needed, model identification, model size, and the like, where the model size may be explicitly indicated, such as 10M, 20M, or 100M, or implicitly indicated, such as small, medium, large, and extra large, and when implicitly indicating the model size, the size values need to be agreed in advance;
first indication, indicating whether a network internal AI unit is required; and
first information, indicating whether network internal data and data source are needed.

Step 2: Optionally, the network exposure function authenticates the request message to determine whether the OTT server can request this type of service.

The network exposure function needs to request OTT-related data of the OTT server from UDM/UDR, including but not limited to subscription data and policy data, for verifying whether AI service-related subscription information exists. If the information exists, subsequent procedures are performed; if the information does not exist, the network exposure function rejects the AI service establishment request of the OTT server.

Step 3: The network exposure function selects a first network element (for example, AI service management function) according to the AI service establishment request message.

An external interface function may discover a matching AI service management function instance using NRF or according to local configuration information based on at least one of the following factors:
area of interest;
UE AI task-related subscription information;
DNN;
S-NSSAI;
AI service identification;
supported AI services; and
first network element (for example, AI service management function) instance capabilities, including determined capabilities such as AI service processing latency, AI service processing accuracy, and AI service computation amount.

Step 4: The external interface function, such as network exposure function, sends an AI service establishment request message (that is, the fourth message) to the first network element (for example, AI service management function), for converting external AI service requirements into an AI policy and allocating corresponding resources and model for the AI service.

The AI service establishment request includes at least one of the following: OTT server identification, DNN, S-NSSAI, AI service identification, model-related parameters, AI service management function instance address, and AI service description information.

Step 5: The first network element (for example, AI service management function) negotiates an AI policy with a policy and charging function; and
the first network element (for example, AI service management function) and the policy and charging function generate a corresponding AI policy according to the AI service establishment request message.

When allocating an AI policy, the first network element (for example, AI service management function) and the policy and charging function comprehensively consider end-to-end service requirements of the AI service.

The policy and charging function and the first network element (for example, AI service management function) may be co-located; and if the policy and charging function and the first network element (for example, AI service management function) are co-located, step 5 is implemented internally in the network element.

Step 6a: The third network element (for example, AI service management function) sends a model request message (that is, the seventh message) to the sixth network element (for example, AI model management function), for determining AI unit information.

Step 6a is an optional step and needs to be performed under at least one of the following conditions:
the AI service establishment request message indicates that the OTT server does not include AI unit information;
the AI service establishment request message includes an indication that interaction with the AI model management function is needed;
the AI service management function cannot acquire AI unit information; and
the AI service management function may select the AI model management function instance according to at least one of the following:
   DNN;
   S-NSSAI;
   AI service identification;
   supported AI services;
   service area information; and
   supported AI unit information.

Step 6b: The sixth network element (for example, AI model management function) sends a model request response (that is, the eighth message) to the third network element (for example, AI service management function), for indicating AI unit information.

The third network element (for example, AI service management function) may determine the data source information according to the AI unit information; and if the data source information is already determined, step 7 is not performed.

Step 7a: The third network element (for example, AI service management function) sends a data source request message to a data plane management function, for determining data source information.

Step 7a is an optional step and needs to be performed under at least one of the following conditions:
the AI service establishment request message indicates that the OTT server does not include data source information;
the AI service establishment request message includes an indication that interaction with the data plane management function is needed;
the AI service management function cannot acquire data source information; and
the AI service management function may select the data plane management function instance according to at least one of the following:
   DNN;
   S-NSSAI;
   AI service identification;
   supported AI services;
   service area information; and
   data source information.

Step 7b: The data plane management function sends a data source request response message to the third network element (for example, AI service management function), for indicating data source information.

Step 8a: The third network element (for example, AI service management function) sends an AI resource request message (that is, the fifth message) to a fifth network element (for example, AI resource management function), and the fifth network element (for example, AI resource management function) determines a suitable AI resource node according to the AI resource request message and the AI policy.

The AI resource request message includes at least one of the following:
AI unit information (AI unit or AI unit download address);
data source information (data source address);
AI service computation amount (computing size and type);
storage requirement;
processing latency requirement;
input data format; and
number of single-sample inferences.

Step 9: The fifth network element (for example, AI resource management function) provides AI resource configuration information to a fourth network element (for example, AI resource node).

The AI resource configuration information includes at least one of the following:
data source information (data source address);
AI service detection information; and
AI service processing rules.

Step 8b: The fifth network element (for example, AI resource management function) sends an AI resource request response message (that is, the sixth message) to the third network element (for example, AI service management function), where the message includes information of a fourth network element (for example, AI resource node), and the information of the fourth network element (for example, AI resource node) includes at least one of the following:
IP address;
ID information; and
FQDN.

The third network element (for example, AI service management function), the sixth network element (for example, AI model management function), and the fifth network element (for example, AI resource management function) may be co-located; and if the AI service management function, AI model management function, and AI resource management function are co-located, steps 6a and 6b and steps 8a and 8b are implemented internally in the network element.

Step 10: The first network element (for example, AI service management function) sends a response message corresponding to the request message of step 1 (that is, the second message) to the OTT server, for notifying the result of the AI service request, including AI resource node information. The response message may also be forwarded via a network exposure function.

Step 11: The OTT server sends first data to the fourth network element (for example, AI resource node), where the first data may also be forwarded via a network exposure function.

The first data includes but is not limited to at least one of the following:
AI unit input data provided by the OTT server;
AI unit label data provided by the OTT server;
ranking of inference results of multiple AI units provided by the OTT server;
AI unit structure provided by the OTT server;
AI unit parameter provided by the OTT server; and
AI unit description provided by the OTT server.

The first data may be interpretable data or may be privately processed data, such as encrypted data.

Step 12: Optionally, the AI resource node acquires intra-network data from a data source.

Step 13: Perform at least one of the following operations according to the AI resource configuration:
AI unit aggregation;
single AI unit training;
multiple AI unit trainings;
single AI unit inference; and
multiple AI unit inferences.

Step 14: The fourth network element (for example, AI resource node) sends second data to the OTT server, where the second data may also be forwarded via a network exposure function.

The second data includes but is not limited to at least one of the following:
network-provided AI unit input data;
network-provided AI unit label data;
network-provided AI unit output result;
action generated based on reinforcement learning;
network-provided AI unit structure;
network-provided AI unit parameter (for example, aggregated AI unit parameter in horizontal federation);
network-provided AI unit description (for example, initial AI unit structure in horizontal federation);
network-provided output of an AI unit split layer; and
network-provided gradient of an AI unit split layer; and
the second data may be interpretable data or may be privately processed data, such as encrypted data.

Step 15: Optionally, if the AI service is AI unit training, after training convergence or the number of iterations reaches the maximum number, the fourth network element updates an AI unit parameter. Specifically, the fourth network element (for example, AI resource node) sends the updated AI unit parameter to the sixth network element (for example, AI model management function), one such method involves forwarding via the fifth network element (for example, AI resource management function). The sixth network element performs AI unit parameter update or AI unit update according to the updated AI unit parameter, which may also include AI unit version update.

Step 16: The fourth network element (for example, AI resource node) sends an AI service termination notification to the third network element (for example, AI service management function). The third network element (for example, AI service management function) sends an ACK to the fifth network element (for example, AI resource management function).

Step 17: The fifth network element (for example, AI resource management function) sends an AI resource release message to the fourth network element (for example, AI resource node).

In the embodiments of the present application, the execution order of step 13 and step 16 may be exchanged.

The method for establishing an AI service provided in the embodiments of the present application may be executed by an apparatus for establishing an AI service. In the embodiments of the present application, the apparatus for establishing an AI service executing the method for establishing an AI service is taken as an example to illustrate the apparatus for establishing an AI service provided in the embodiments of the present application.

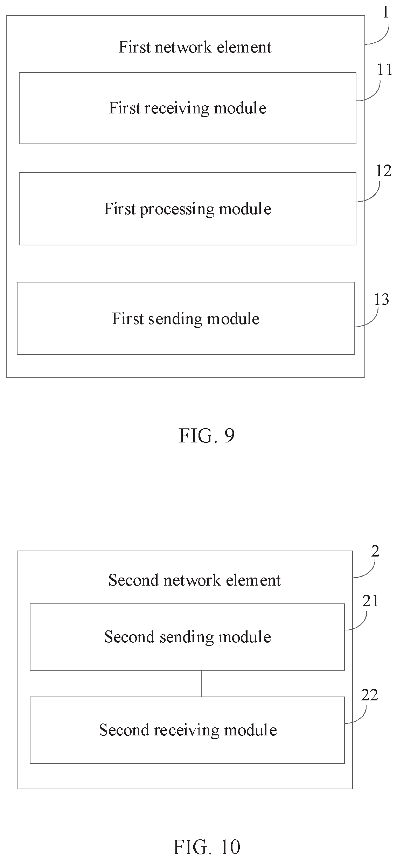

Referring to FIG. 9, FIG. 9 is a schematic structural diagram of an apparatus for establishing an AI service according to an embodiment of the present application. The apparatus is applied to a first network element 1. As shown in FIG. 9, the apparatus for establishing an AI service includes:
a first receiving module 11, configured to acquire an establishment request for establishing an artificial intelligence AI service for a second network element;
a first processing module 12, configured to determine an AI policy according to the establishment request; and
a first sending module 13, configured to return a response message of the establishment request to the second network element according to the AI policy.

In some embodiments, when the first network element is a policy and charging function, the first receiving module 11 is configured to receive a first message, where the first message is used to request to establish an AI service for the second network element, and the first message includes at least one of the following:
AI service requirement description information;
data network name DNN;
single network slice selection assistance information S-NSSAI; and
policy identification, including AI service policy indication negotiated between the second network element and the first network element.

In some embodiments, the first sending module 13 is configured to return a second message to the second network element, where the second message is used to respond to the first message, and the second message includes information of a fourth network element.

In some embodiments, when the first network element is a policy and charging function, the first sending module 13 is configured to send a third message to a third network element, where the third message includes at least one of the following:
identification of the second network element;
AI service identification;
AI unit parameter;
AI policy;
address of an application server AS; and
the first network element receives information of a fourth network element returned by the third network element.

In some embodiments, when the first network element is an AI service management function, the first receiving module 11 is configured to receive a fourth message, where the fourth message includes at least one of the following:
identification of the second network element;
AI service identification;
AI unit parameter;
address of the first network element; and
AI service requirement description information.

In some embodiments, the AI service requirement description information includes at least one of the following:
AI service identification;
service type indication;
AI service quality of experience QoE requirement;
AI service requirement and/or objective information;
description information of an AI unit;
first indication, indicating whether a network internal AI unit is required; and
first information, indicating whether network internal data and data source are needed.

In some embodiments, when the first network element is an AI service management function, the first sending module 13 is further configured to send a fifth message to a fifth network element, where the fifth message includes at least one of the following:
AI unit information, data source information, AI service computation amount, storage requirement, processing latency requirement, input data format, and number of single-sample inferences; and
the first receiving module 11 is further configured to receive information of a fourth network element returned by the fifth network element.

Referring to FIG. 10, FIG. 10 is a schematic structural diagram of an apparatus for establishing an AI service according to an embodiment of the present application. The apparatus is applied to a second network element 2. As shown in FIG. 10, the apparatus for establishing an AI service includes:
a second sending module 21, configured to send an establishment request for establishing an artificial intelligence AI service to a first network element; and
a second receiving module 22, configured to receive the response message of the establishment request returned by the first network element.

In some embodiments, the second sending module 21 is configured to send a first message to the first network element, where the first message is used to request to establish an AI service for the second network element, and the first message includes at least one of the following:
AI service requirement description information;
data network name DNN;
single network slice selection assistance information S-NSSAI; and
policy identification, including AI service policy indication negotiated between the second network element and the first network element.

In some embodiments, the AI service requirement description information includes at least one of the following:
AI service identification;
service type indication;
AI service quality of experience QoE requirement;
AI service requirement and/or objective information;
description information of an AI unit;
first indication, indicating whether a network internal AI unit is required; and
first information, indicating whether network internal data and data source are needed.

In some embodiments, the second receiving module 22 is configured to receive a second message returned by the first network element, where the second message is used to respond to the first message, and the second message includes information of a fourth network element.

In some embodiments, the second sending module 21 is further configured to send first data to the fourth network element; and the second receiving module 22 is further configured to receive second data returned by the fourth network element.

In some embodiments, the first data is forwarded via a network exposure function or sent directly by the second network element to the fourth network element; and
the second data is forwarded via a network exposure function or sent directly by the fourth network element to the second network element.

In some embodiments, the first data includes at least one of the following:
AI unit input data;
AI unit label data;
ranking of inference results of multiple AI units;
AI unit structure;
AI unit parameter;
AI unit description;
output of an AI unit split layer; and
gradient of an AI unit split layer.

In some embodiments, the second data includes at least one of the following:
network-provided AI unit input data;
network-provided AI unit label data;
network-provided AI unit output result;
action generated based on reinforcement learning;
network-provided AI unit structure;
network-provided AI unit parameter;
network-provided AI unit description;
network-provided output of an AI unit split layer; and
network-provided gradient of an AI unit split layer.

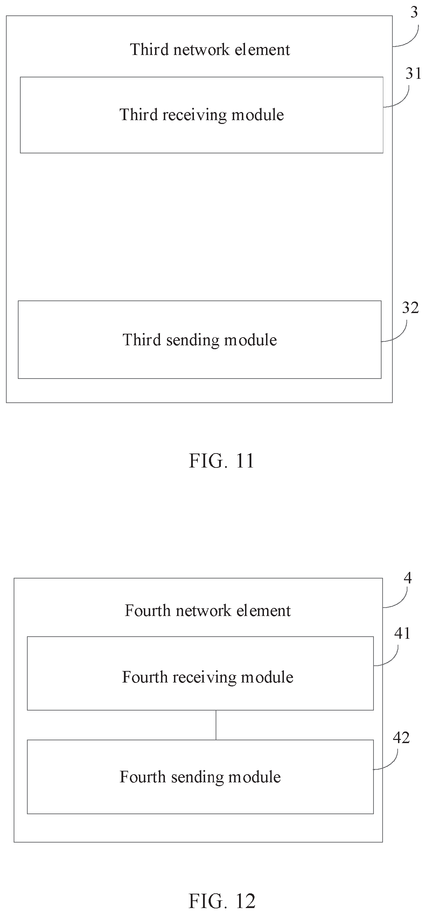

Referring to FIG. 11, FIG. 11 is a schematic structural diagram of an apparatus for establishing an AI service according to an embodiment of the present application. The apparatus is applied to a third network element 3. As shown in FIG. 11, the apparatus for establishing an AI service includes:
a third receiving module 31, configured to acquire an establishment request for establishing an artificial intelligence AI service for a second network element; and
a third sending module 32, configured to return a response message of the establishment request to a first network element.

In some embodiments, when the sender of the AI service establishment request is a policy and charging function, the third receiving module 31 is configured to receive a third message, where the third message is used to request at least one of the following for the AI service of the second network element: AI resource, AI unit, and data source, and the third message includes at least one of the following:
identification of the second network element;
AI service identification;
AI unit parameter;
AI policy; and
address of an application server AS.

In some embodiments, the third receiving module 31 is further configured to acquire an AI policy, where the acquisition manner includes at least one of the following:
acquiring according to local configuration; and
acquiring from the first network element.

In some embodiments, the third sending module 32 is further configured to send a fifth message to a fifth network element, so that the fifth network element selects a fourth network element according to the fifth message and the AI policy, where the fifth message includes at least one of the following: AI unit information, data source information, AI service computation amount, storage requirement, processing latency requirement, AI unit input data format, and number of single-sample inferences; and
the third receiving module 31 is further configured to receive a sixth message returned by the fifth network element, where the sixth message is used to respond to the fifth message, the sixth message includes information of a fourth network element, and the information of the fourth network element includes at least one of the following:
Internet protocol IP address;
identification information; and
fully qualified domain name FQDN.

In some embodiments, the third sending module 32 is further configured to, in a case that a first condition is satisfied, send a seventh message to a sixth network element, where the seventh message is used to request AI unit information, and the seventh message includes at least one of the following: service type indication, expected accuracy rate, data storage requirement, AI unit input data format, AI unit output data format, generalization metric, and applicable scope indication; and
the third receiving module 31 is further configured to receive an eighth message sent by the sixth network element, where the eighth message is used to respond to the seventh message, the eighth message is used to indicate AI unit information, and the AI unit information includes at least one of the following: structure of the AI unit, parameters of the AI unit, executable file for AI unit inference, and download address of the AI unit; where
the first condition includes at least one of the following:
   the AI service establishment request indicates that the second network element does not include AI unit information;
   the AI service establishment request includes a first indication indicating that the third network element needs to interact with the sixth network element; and
   the third network element cannot acquire AI unit information.

In some embodiments, the third sending module 32 is further configured to return a ninth message to the first network element, where the ninth message includes information of a fourth network element, returning, by the first network element, a second message to the second network element, and the second message includes information of the fourth network element.

Referring to FIG. 12, FIG. 12 is a schematic structural diagram of an apparatus for establishing an AI service according to an embodiment of the present application. The apparatus is applied to a fourth network element 4. As shown in FIG. 12, the apparatus for establishing an AI service includes:
a fourth receiving module 41, configured to receive configuration information of a fifth network element, where the configuration information is used to configure AI resources, and the configuration information includes at least one of the following:
third indication, where the third indication is used to indicate an AI framework;
fourth indication, where the fourth indication is used to indicate an AI library version;
fifth indication, where the fifth indication is used to indicate the number of single-sample inferences;
data source information;
AI service detection information; and
AI service processing rule; where
the fourth receiving module 41 is further configured to receive first data of a second network element; and
a fourth sending module 42, configured to return second data to the second network element.

In some embodiments, the first data is forwarded via a network exposure function or sent directly by the second network element to the fourth network element; and
the second data is forwarded via a network exposure function or sent directly by the fourth network element to the second network element.

In some embodiments, the first data includes at least one of the following:
AI unit input data;
AI unit label data;
ranking of inference results of multiple AI units;
AI unit structure;
AI unit parameter, for example, whether a network internal AI unit is required, an AI unit identification, and an AI unit size;
AI unit description;
output of an AI unit split layer; and
gradient of an AI unit split layer.

In some embodiments, the second data includes at least one of the following:
network-provided AI unit input data;
network-provided AI unit label data;
network-provided AI unit output result;
action generated based on reinforcement learning;
network-provided AI unit structure;
network-provided AI unit parameter;
network-provided AI unit description;
network-provided output of an AI unit split layer; and
network-provided gradient of an AI unit split layer.

In some embodiments, the fourth receiving module 41 is further configured to acquire intra-network data from a data source.

In some embodiments, the fourth network element performs at least one of the following according to the configuration information:
AI unit aggregation;
single AI unit training;
multiple AI unit trainings;
single AI unit inference; and
multiple AI unit inferences.

In some embodiments, the fourth sending module 42 is further configured to send an AI service termination notification to the fifth network element, so that a third network element, after receiving the AI service termination notification forwarded by the fifth network element, sends a confirmation message to the fifth network element; and
the fourth receiving module 41 is further configured to receive an AI resource release message sent by the fifth network element, where the AI resource release message is sent after the fifth network element receives the confirmation message.

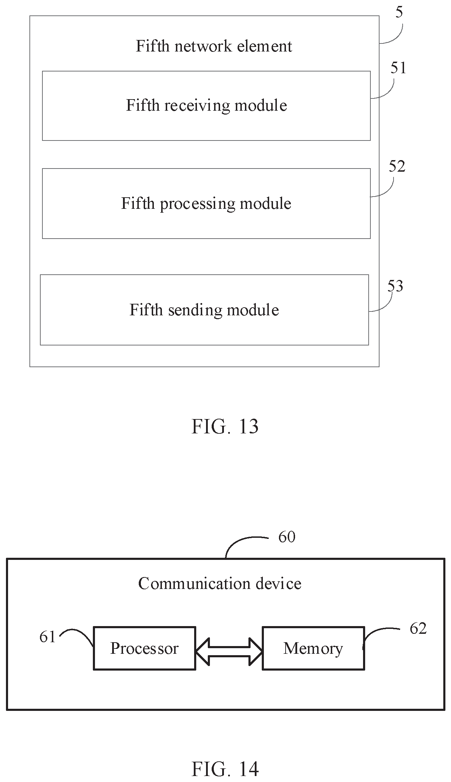

Referring to FIG. 13, FIG. 13 is a schematic structural diagram of an apparatus for establishing an AI service according to an embodiment of the present application. The apparatus is applied to a fifth network element 5. As shown in FIG. 13, the apparatus for establishing an AI service includes:
a fifth receiving module 51, configured to receive a fifth message sent by a third network element, where the fifth message includes at least one of the following: AI unit information, data source information, AI service computation amount, storage requirement, processing latency requirement, input data format, and number of single-sample inferences;
a fifth processing module 52, configured to select a fourth network element according to the fifth message and an AI policy; and
a fifth sending module 53, configured to return a sixth message to the third network element, where the sixth message includes information of the fourth network element, and the information of the fourth network element includes at least one of the following:
   Internet protocol IP address;
   identification information; and
   fully qualified domain name FQDN.

In some embodiments, the fifth sending module 53 is further configured to send configuration information to the fourth network element, where the configuration information is used to configure AI resources, and the configuration information includes at least one of the following:
third indication, where the third indication is used to indicate an AI framework;
fourth indication, where the fourth indication is used to indicate an AI library version;
fifth indication, where the fifth indication is used to indicate the number of single-sample inferences;
data source information;
AI service detection information; and
AI service processing rules.

In some embodiments, the fifth receiving module 51 is further configured to receive a confirmation message sent by the third network element; and
the fifth sending module 53 is further configured to send an AI resource release message to the fourth network element.

The apparatus for establishing an AI service provided in this embodiment of the present application is capable of implementing the processes implemented in the method embodiments in FIG. 2 to FIG. 6, with the same technical effects achieved. To avoid repetition, details are not described herein again.

As shown in FIG. 14, an embodiment of the present application further provides a communication device 60 including a processor 61 and a memory 62, where a program or instructions are stored in the memory 62 and capable of running on the processor 61. For example, in a case that the communication device 60 is a network-side device, when the program or instructions are executed by the processor 61, the steps of the foregoing embodiment of the method for establishing an AI service are implemented, with the same technical effects achieved. To avoid repetition, details are not described herein again.

An embodiment of the present application further provides a network-side device including a processor and a communication interface, where the communication interface is coupled to the processor, and the processor is configured to run a program or instructions so as to implement the steps of the method embodiment as shown in FIG 2 to FIG. 6. The network-side device embodiment corresponds to the foregoing network-side device method embodiment. All processes and implementations in the foregoing method embodiment may be applicable to the network-side device embodiment, with the same technical effects achieved.

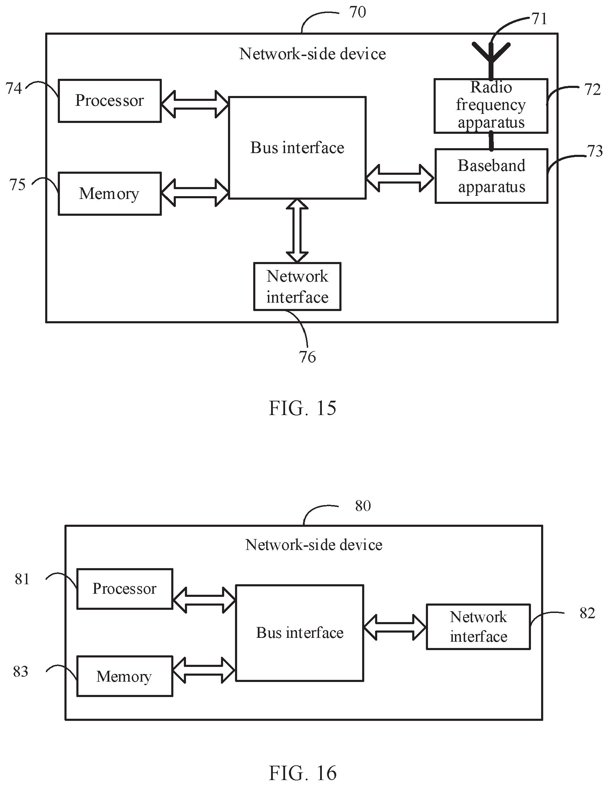

Specifically, an embodiment of the present application further provides a network-side device. As shown in FIG. 15, the network-side device 70 includes: an antenna 71, a radio frequency apparatus 72, a baseband apparatus 73, a processor 74, and a memory 75. The antenna 71 is connected to the radio frequency apparatus 72. In an uplink direction, the radio frequency apparatus 72 receives information by using the antenna 71, and sends the received information to the baseband apparatus 73 for processing. In a downlink direction, the baseband apparatus 73 processes to-be-sent information, and sends the information to the radio frequency apparatus 72; and the radio frequency apparatus 72 processes the received information and then sends the information using the antenna 71.

The method performed by the network-side device in the foregoing embodiment may be implemented in the baseband apparatus 73, and the baseband apparatus 73 includes a baseband processor.

The baseband apparatus 73 may include, for example, at least one baseband board, where a plurality of chips are disposed on the baseband board. As shown in FIG. 15, one of the chips is, for example, the baseband processor, and connected to the memory 75 through a bus interface, to invoke the program in the memory 75 to perform the operations of the network-side device shown in the foregoing method embodiment.

The network-side device may further include a network interface 76, where the interface is, for example, a common public radio interface (Common Public Radio Interface, CPRI).

Specifically, the network-side device 70 in this embodiment of the present application further includes: instructions or a program stored in the memory 75 and capable of running on the processor 74. The processor 74 invokes the instructions or program in the memory 75 to execute the method executed by the modules shown in FIG. 9 to FIG. 13, with the same technical effects achieved. To avoid repetition, details are not described herein again.

Specifically, an embodiment of the present application further provides a network-side device. As shown in FIG. 16, the network-side device 80 includes a processor 81, a network interface 82, a memory 83. The network interface 82 may be, for example, a common public radio interface (common public radio interface, CPRI).

Specifically, the network-side device 80 in this embodiment of the present application further includes: instructions or a program stored in the memory 83 and capable of running on the processor 81. The processor 81 invokes the instructions or program in the memory 83 to execute the method executed by the modules shown in FIG. 9 to FIG. 13, with the same technical effects achieved. To avoid repetition, details are not described herein again.

An embodiment of this application further provide a readable storage medium, where the readable storage medium stores a program or instructions, and when the program or instructions are executed by a processor, the processes of the foregoing embodiments of the methods for establishing an AI service are implemented, with the same technical effects achieved. To avoid repetition, details are not described herein again.

The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface, where the communication interface is coupled to the processor, and the processor is configured to run a program or instructions to implement the processes of the foregoing embodiments of the methods for establishing an AI service, with the same technical effect achieved. To avoid repetition, details are not described herein again.

It should be understood that the chip mentioned in this embodiment of the present application may also be referred to as a system-on-chip, a system chip, a chip system, a system-on-a-chip, or the like.

An embodiment of this application further provides a computer program/program product, where the computer program/program product is stored in a storage medium, and the computer program/program product is executed by at least one processor to implement the processes of the foregoing embodiments of the methods for establishing an AI service, with the same technical effects achieved. To avoid repetition, the details are not repeated herein.

An embodiment of the present application further provides a wireless communication system, including a first network element, a second network element, and a third network element, where
the first network element is configured to acquire an establishment request for establishing an artificial intelligence AI service for the second network element, determine an AI policy according to the establishment request, and return a response message of the establishment request to the second network element according to the AI policy;
the second network element is configured to send an establishment request for establishing an artificial intelligence AI service to the first network element, and receive the response message of the establishment request returned by the first network element; and
the third network element is configured to acquire an establishment request for establishing an artificial intelligence AI service for the second network element, and return a response message of the establishment request to the first network element; where
the first network element and the third network element are core network elements, and the second network element is a third-party service network element.

In some embodiments, the wireless communication system further includes a fourth network element, where
the fourth network element is configured to receive configuration information of a fifth network element, where the configuration information is used to configure AI resources, and the configuration information includes at least one of the following: third indication, where the third indication is used to indicate an AI framework; fourth indication, where the fourth indication is used to indicate an AI library version; fifth indication, where the fifth indication is used to indicate the number of single-sample inferences; data source information; AI service detection information; and AI service processing rule; receive first data of a second network element; and return second data to the second network element;

In some embodiments, the wireless communication system further includes a fifth network element, where
the fifth network element is configured to receive a fifth message sent by a third network element, where the fifth message includes at least one of the following: AI unit information, data source information, AI service computation amount, storage requirement, processing latency requirement, input data format, and number of single-sample inferences; select a fourth network element according to the fifth message and an AI policy; and return a sixth message to the third network element, where the sixth message includes information of the fourth network element, and the information of the fourth network element includes at least one of the following: Internet protocol IP address; identification information; and fully qualified domain name FQDN.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by a computer software product with a necessary general hardware platform. Certainly, the method in the foregoing embodiment may also be implemented by hardware. The computer software product is stored in a storage medium (such as ROM, RAM, magnetic disk, or optical disk), and includes several instructions for causing the second network element or a network-side device to execute the methods described in each embodiment of the present application.

The embodiments of the present application have been described above with reference to the accompanying drawings, but the present application is not limited to the above specific embodiments. These specific embodiments are merely illustrative and not restrictive. Under the enlightenment of the present application, many forms of embodiments can be made by those of ordinary skill in the art without departing from the purpose of the present application and the scope protected by the claims, and these forms of embodiments all fall within the protection of the present application.

## Claims

1. A method for establishing an AI service, comprising:
acquiring, by a first network element, an establishment request for establishing an artificial intelligence AI service for a second network element;
determining, by the first network element, an AI policy according to the establishment request; and
returning, by the first network element, a response message of the establishment request to the second network element according to the AI policy; wherein
the first network element is a core network element, and the second network element is a third-party service network element.

2. The method for establishing an AI service according to claim 1, wherein the first network element is a policy and charging function, the acquiring, by a first network element, an establishment request for establishing an artificial intelligence AI service for a second network element comprises:
receiving, by the first network element, a first message, wherein the first message is used to request to establish an AI service for the second network element, and the first message comprises at least one of the following:
AI service requirement description information;
data network name DNN;
single network slice selection assistance information S-NSSAI; and
policy identification, comprising AI service policy indication negotiated between the second network element and the first network element.

3. The method for establishing an AI service according to claim 2, wherein the returning a response message of the establishment request to the second network element comprises:
returning a second message to the second network element, wherein the second message is used to respond to the first message.

4. The method for establishing an AI service according to any one of claims 1 to 3, wherein the first network element is a policy and charging function, and the method further comprises:
sending, by the first network element, a third message to a third network element, wherein the third message comprises at least one of the following: identification of the second network element; AI service identification; AI unit parameter; AI policy; and address of an application server AS; and
receiving, by the first network element, information of a fourth network element returned by the third network element.

5. The method for establishing an AI service according to claim 1, wherein the first network element is an AI service management function, the acquiring, by a first network element, an establishment request for establishing an artificial intelligence AI service for a second network element comprises:
receiving, by the first network element, a fourth message, wherein the fourth message comprises at least one of the following:
identification of the second network element;
AI service identification;
AI unit parameter;
address of the first network element; and
AI service requirement description information.

6. The method for establishing an AI service according to claim 2 or 5, wherein the AI service requirement description information comprises at least one of the following:
AI service identification;
service type indication;
AI service quality of experience QoE requirement;
AI service requirement and/or objective information;
description information of an AI unit;
first indication, indicating whether a network internal AI unit is required; and
first information, indicating whether network internal data and data source are needed.

7. The method for establishing an AI service according to claim 1, wherein when the first network element is an AI service management function, the method further comprises:
sending, by the first network element, a fifth message to a fifth network element, wherein the fifth message comprising at least one of the following:
AI unit information, data source information, AI service computation amount, storage requirement, processing latency requirement, input data format, and number of single-sample inferences; and
receiving, by the first network element, information of a fourth network element returned by the fifth network element.

8. A method for establishing an AI service, comprising:
sending, by a second network element, an establishment request for establishing an artificial intelligence AI service to a first network element; and
receiving, by the second network element, a response message of the establishment request returned by the first network element; wherein
the first network element is a core network element, and the second network element is a third-party service network element.

9. The method for establishing an AI service according to claim 8, wherein the sending, by a second network element, an establishment request for establishing an artificial intelligence AI service to a first network element comprises:
sending, by the second network element, a first message to the first network element, wherein the first message is used to request to establish an AI service for the second network element, and the first message comprises at least one of the following:
AI service requirement description information;
data network name DNN;
single network slice selection assistance information S-NSSAI; and
policy identification, comprising AI service policy indication negotiated between the second network element and the first network element.

10. The method for establishing an AI service according to claim 9, wherein the AI service requirement description information comprises at least one of the following:
AI service identification;
service type indication;
AI service quality of experience QoE requirement;
AI service requirement and/or objective information;
description information of an AI unit;
first indication, indicating whether a network internal AI unit is required; and
first information, indicating whether network internal data and data source are needed.

11. The method for establishing an AI service according to claim 9, wherein the receiving, by the second network element, a response message of the establishment request returned by the first network element comprises:
receiving, by the second network element, a second message returned by the first network element, wherein the second message is used to respond to the first message, and the second message comprises information of a fourth network element.

12. The method for establishing an AI service according to claim 11, wherein after the receiving, by the second network element, a second message returned by the first network element, the method further comprises:
sending, by the second network element, first data to the fourth network element; and
receiving, by the second network element, second data returned by the fourth network element.

13. The method for establishing an AI service according to claim 12, wherein the first data is forwarded by a network exposure function or sent directly by the second network element to the fourth network element; and
the second data is forwarded by a network exposure function or sent directly by the fourth network element to the second network element.

14. The method for establishing an AI service according to claim 12, wherein the first data comprises at least one of the following:
AI unit input data;
AI unit label data;
ranking of inference results of multiple AI units;
AI unit structure;
AI unit parameter;
AI unit description;
output of an AI unit split layer; and
gradient of an AI unit split layer.

15. The method for establishing an AI service according to claim 12, wherein the second data comprises at least one of the following:
network-provided AI unit input data;
network-provided AI unit label data;
network-provided AI unit output result;
action generated based on reinforcement learning;
network-provided AI unit structure;
network-provided AI unit parameter;
network-provided AI unit description;
network-provided output of an AI unit split layer; and
network-provided gradient of an AI unit split layer.

16. A method for establishing an AI service, comprising:
acquiring, by a third network element, an establishment request for establishing an artificial intelligence AI service for a second network element; and
returning, by the third network element, a response message of the establishment request to a first network element.

17. The method for establishing an AI service according to claim 16, wherein when the first network element is a policy and charging function, the acquiring, by a third network element, an establishment request for establishing an artificial intelligence AI service for a second network element comprises:
receiving, by the third network element, a third message, wherein the third message is used to request at least one of the following for the AI service of the second network element: AI resource, AI unit, and data source, and the third message comprises at least one of the following:
identification of the second network element;
AI service identification;
AI unit parameter;
AI policy; and
address of an application server AS.

18. The method for establishing an AI service according to claim 17, wherein the method further comprises:
acquiring, by the third network element, an AI policy, wherein the acquisition manner comprises at least one of the following:
acquiring according to local configuration; and
acquiring from the first network element.

19. The method for establishing an AI service according to claim 18, wherein the acquiring, by the third network element, an AI resources comprises:
sending, by the third network element, a fifth message to a fifth network element, wherein the fifth message comprises at least one of the following: AI unit information, data source information, AI service computation amount, storage requirement, processing latency requirement, AI unit input data format, and number of single-sample inferences;
receiving, by the third network element, a sixth message returned by the fifth network element, wherein the sixth message comprises information of a fourth network element, the fourth network element is determined according to the fifth message and the AI policy, and the information of the fourth network element comprises at least one of the following:
Internet protocol IP address;
identification information; and
fully qualified domain name FQDN.

20. The method for establishing an AI service according to claim 19, wherein before the sending, by the third network element, a fifth message to the fifth network element, the method further comprises:
in a case that a first condition is satisfied, sending, by the third network element, a seventh message to a sixth network element, wherein the seventh message is used to request AI unit information, and the seventh message comprises at least one of the following: service type indication, expected accuracy rate, data storage requirement, AI unit input data format, AI unit output data format, generalization metric, and applicable scope indication; and
receiving, by the third network element, an eighth message sent by the sixth network element, wherein the eighth message is used to respond to the seventh message, the eighth message is used to indicate AI unit information, and the AI unit information comprises at least one of the following: structure of the AI unit, parameters of the AI unit, executable file for AI unit inference, and download address of the AI unit; wherein
the first condition comprises at least one of the following:
the AI service establishment request indicates that the second network element does not comprise AI unit information;
the AI service establishment request comprises a first indication indicating that the third network element needs to interact with the sixth network element; and
the third network element cannot acquire AI unit information.

21. The method for establishing an AI service according to claim 16, wherein returning the response message of the establishment request to the first network element comprises:
returning, by the third network element, a ninth message to the first network element, wherein the ninth message comprises information of a fourth network element.

22. A method for establishing an AI service, comprising:
receiving, by a fourth network element, configuration information of a fifth network element, wherein the configuration information is used to configure AI resources, and the configuration information comprises at least one of the following:
third indication, wherein the third indication is used to indicate an AI framework; fourth indication, wherein the fourth indication is used to indicate an AI library version; fifth indication, wherein the fifth indication is used to indicate the number of single-sample inferences; data source information; AI service detection information; and AI service processing rule;
receiving, by the fourth network element, first data of a second network element; and
returning, by the fourth network element, second data to the second network element.

23. The method for establishing an AI service according to claim 22, wherein the first data is forwarded by a network exposure function or sent directly by the second network element to the fourth network element; and
the second data is forwarded by a network exposure function or sent directly by the fourth network element to the second network element.

24. The method for establishing an AI service according to claim 22, wherein the first data comprises at least one of the following:
AI unit input data;
AI unit label data;
ranking of inference results of multiple AI units;
AI unit structure;
AI unit parameter;
AI unit description;
output of an AI unit split layer; and
gradient of an AI unit split layer.

25. The method for establishing an AI service according to claim 22, wherein the second data comprises at least one of the following:
network-provided AI unit input data;
network-provided AI unit label data;
network-provided AI unit output result;
action generated based on reinforcement learning;
network-provided AI unit structure;
network-provided AI unit parameter;
network-provided AI unit description;
network-provided output of an AI unit split layer; and
network-provided gradient of an AI unit split layer.

26. The method for establishing an AI service according to claim 22, wherein the method further comprises:
acquiring, by the fourth network element, intra-network data from a data source.

27. The method for establishing an AI service according to claim 22, wherein the method further comprises:
performing, by the fourth network element, at least one of the following according to the configuration information:
AI unit aggregation;
single AI unit training;
multiple AI unit trainings;
single AI unit inference; and
multiple AI unit inferences.

28. The method for establishing an AI service according to claim 22, wherein after the fourth network element completes the configured operations, the method further comprises:
sending, by the fourth network element, an AI service termination notification to the fifth network element, so that a third network element, after receiving the AI service termination notification forwarded by the fifth network element, sends a confirmation message to the fifth network element; and
receiving, by the fourth network element, an AI resource release message sent by the fifth network element, wherein the AI resource release message is sent after the fifth network element receives the confirmation message.

29. A method for establishing an AI service, comprising:
receiving, by a fifth network element, a fifth message sent by a third network element, wherein the fifth message comprises at least one of the following: AI unit information, data source information, AI service computation amount, storage requirement, processing latency requirement, input data format, and number of single-sample inferences; and
selecting, by the fifth network element, a fourth network element according to the fifth message and an AI policy, and returning a sixth message to the third network element, wherein the sixth message comprises information of the fourth network element, and the information of the fourth network element comprises at least one of the following:
Internet protocol IP address;
identification information; and
fully qualified domain name FQDN.

30. The method for establishing an AI service according to claim 29, wherein the method further comprises:
sending, by the fifth network element, configuration information to the fourth network element, wherein the configuration information is used to configure AI resources, and the configuration information comprises at least one of the following:
third indication, wherein the third indication is used to indicate an AI framework;
fourth indication, wherein the fourth indication is used to indicate an AI library version;
fifth indication, wherein the fifth indication is used to indicate the number of single-sample inferences;
data source information;
AI service detection information; and
AI service processing rules.

31. The method for establishing an AI service according to claim 29, wherein the method further comprises:
receiving, by the fifth network element, a confirmation message sent by the third network element; and
sending, by the fifth network element, an AI resource release message to the fourth network element.

32. An apparatus for establishing an AI service, comprising:
a first receiving module, configured to acquire an establishment request for establishing an artificial intelligence AI service for a second network element;
a first processing module, configured to determine an AI policy according to the establishment request; and
a first sending module, configured to return a response message of the establishment request to the second network element according to the AI policy.

33. An apparatus for establishing an AI service, comprising:
a second sending module, configured to send an establishment request for establishing an artificial intelligence AI service to a first network element; and
a second receiving module, configured to receive a response message of the establishment request returned by the first network element.

34. An apparatus for establishing an AI service, comprising:
a third receiving module, configured to acquire an establishment request for establishing an artificial intelligence AI service for a second network element; and
a third sending module, configured to return a response message of the establishment request to a first network element.

35. An apparatus for establishing an AI service, comprising:
a fourth receiving module, configured to receive configuration information of a fifth network element, wherein the configuration information is used to configure AI resources, and the configuration information comprises at least one of the following:
third indication, wherein the third indication is used to indicate an AI framework;
fourth indication, wherein the fourth indication is used to indicate an AI library version;
fifth indication, wherein the fifth indication is used to indicate the number of single-sample inferences;
data source information;
AI service detection information; and
AI service processing rule; wherein
the fourth receiving module is further configured to receive first data of a second network element; and
a fourth sending module, configured to return second data to the second network element.

36. An apparatus for establishing an AI service, comprising:
a fifth receiving module, configured to receive a fifth message sent by a third network element, wherein the fifth message comprises at least one of the following: AI unit information, data source information, AI service computation amount, storage requirement, processing latency requirement, input data format, and number of single-sample inferences;
a fifth processing module, configured to select a fourth network element according to the fifth message and an AI policy; and
a fifth sending module, configured to return a sixth message to the third network element, wherein the sixth message comprises information of the fourth network element, and the information of the fourth network element comprises at least one of the following:
Internet protocol IP address;
identification information; and
fully qualified domain name FQDN.

37. A wireless communication system, comprising a first network element, a second network element, and a third network element, wherein
the first network element is configured to acquire an establishment request for establishing an artificial intelligence AI service for the second network element, determine an AI policy according to the establishment request, and return a response message of the establishment request to the second network element according to the AI policy;
the second network element is configured to send an establishment request for establishing an artificial intelligence AI service to the first network element, and receive the response message of the establishment request returned by the first network element; and
the third network element is configured to acquire an establishment request for establishing an artificial intelligence AI service for the second network element, and return a response message of the establishment request to the first network element; wherein
the first network element and the third network element are core network elements, and the second network element is a third-party service network element.

38. The wireless communication system according to claim 37, further comprising a fourth network element, wherein
the fourth network element is configured to receive configuration information of a fifth network element, wherein the configuration information is used to configure AI resources, and the configuration information comprises at least one of the following:
third indication, wherein the third indication is used to indicate an AI framework; fourth indication, wherein the fourth indication is used to indicate an AI library version; fifth indication, wherein the fifth indication is used to indicate the number of single-sample inferences; data source information; AI service detection information; and AI service processing rule; receive first data of a second network element, and return second data to the second network element.

39. The wireless communication system according to claim 38, further comprising a fifth network element, wherein
the fifth network element is configured to receive a fifth message sent by a third network element, wherein the fifth message comprises at least one of the following: AI unit information, data source information, AI service computation amount, storage requirement, processing latency requirement, input data format, and number of single-sample inferences; select a fourth network element according to the fifth message and an AI policy, and return a sixth message to the third network element, wherein the sixth message comprises information of the fourth network element, and the information of the fourth network element comprises at least one of the following: Internet protocol IP address; identification information; and fully qualified domain name FQDN.

40. A network-side device, comprising a processor and a memory, wherein the memory stores a program or instructions executable on the processor, and the program or instructions, when executed by the processor, implement the steps of the method for establishing an AI service according to any one of claims 1 to 7, claims 8 to 15, claims 16 to 21, claims 22 to 28, or claims 29 to 31.

41. A readable storage medium, wherein the readable storage medium stores a program or instructions, and the program or instructions, when executed by a processor, implement the steps of the method for establishing an AI service according to any one of claims 1 to 7, claims 8 to 15, claims 16 to 21, claims 22 to 28, or claims 29 to 31.
